# FASCICULE DE BREVET EUROPEEN

(11) **EP 1 539 655 B1**
(45) Date de publication et mention de la délivrance du brevet: **15.04.2009**
(21) Numéro de dépôt: 03756016.6
(22) Date de dépôt: 28.05.2003
(51) Int. Cl.: C04B 40/04

(54) **COMPOSITIONS DE TRAITEMENT DE SURFACES DE MORTIERS OU BETONS FRAIS ASSURANT SIMULTANEMENT RETENTION D'EAU ET CAPACITE D'ADHESION RENFORCEE**
BEHANDLUNGSZUSAMMENSETZUNGEN FÜR FRISCHE BETON- ODER MÖRTELOBERFLÄCHEN, DIE VERBESSERTES HAFTVERMÖGEN UND WASSERÜCKHALTEVERMÖGEN BIETEN
TREATMENT COMPOSITIONS FOR FRESH CONCRETE OR MORTAR SURFACES WHICH OFFER IMPROVED ADHESION CAPACITY AND WATER RETENTION POWER

(30) Priorité: 30.05.2002 FR 0206653
(43) Date de publication de la demande: 15.06.2005
(73) Titulaire: Chryso S.A.S., 92446 Issy-Les-Moulineaux (FR)
(72) Inventeur: MOSQUET, Martin, F-45300 Dadonville (FR); MALBAULT, Olivier, F-91820 Boutigny sur Essonne (FR); DUBOIS-BRUGGER, Isabelle, 69680 CHASSIEU (FR)
(74) Mandataire: Gaucherand, Michel
(86) Numéro de dépôt international: PCT/FR2003/001614
(87) Numéro de publication internationale: WO 2003/101910

(56) Documents cités:
- DE-C- 19 735 431
- FR-A- 2 691 962
- US-A- 2 928 752
- US-A- 4 495 319

## Description

### Domaine de l'invention

L'invention concerne des compositions aqueuses de traitement de surfaces de mortiers et/ou bétons fraîchement mis en place ou fraîchement démoulés assurant la rétention d'eau nécessaire à leur prise et leur durcissement et octroyant aux dites surfaces traitées une forte capacité d'adhésion pour les matériaux de finition destinés à les recouvrir.

L'invention concerne plus particulièrement des compositions de cure pour les surfaces de mortiers et/ou bétons fraîchement mis en place ou fraîchement démoulés pour empêcher l'évaporation d'une partie de l'eau intervenant dans leur préparation, car nécessaire à leur prise et leur durcissement et pour donner aux surfaces ainsi traitées une forte capacité d'adhésion pour les matériaux de finition destinés à les recouvrir, compositions comprenant en émulsion aqueuse au moins une paraffine seule ou associée à un autre composé hydrocarboné à l'état solide et/ou liquide à température ambiante, tel que par exemple des cires et/ou huiles hydrocarbonées naturelles ou de synthèse, au moins un latex et au moins une charge pulvérulente d'origine minérale et/ou organique, ces divers composés agissant en pleine synergie.

L'invention concerne également le procédé de préparation et de mise en oeuvre desdites compositions à la surface des mortiers et/ou bétons fraîchement mis en place ou fraîchement démoulés.

L'invention concerne enfin l'utilisation desdites compositions sous la forme d'une couche déposées sur la surface de mortiers et/ou de bétons fraîchement mis en place ou fraîchement démoulés, mis en oeuvre pour assurer la rétention d'eau au sein de mortiers et/ou bétons au moment de leur prise et de leur durcissement et y maintenir une quantité d'eau suffisante aux fins d'empêcher, ou d'au moins limiter, les phénomènes de retrait avec apparitions de fentes, et réserver, à ces mortiers et/ou bétons, les caractéristiques recherchées telles que, par exemple, un très faible retrait, une bonne imperméabilité à l'eau, une excellente résistance au gel et autres et fournir ainsi, aux dites surfaces de mortier et/ou de bétons une forte capacité d'adhésion pour les matériaux de finition destinés à les recouvrir, tels que du plâtre, céramiques, peintures, enduits divers ou autres, sans élimination préalable de ladite couche.

### Etat de la technique

L'incorporation d'eau dans un milieu contenant un liant hydraulique parmi ses constituants, tel que mortiers et/ou bétons, provoque des réactions irréversibles de formation de cristaux en aiguilles par hydratation des sels minéraux présents, initialement amorphes et anhydres, et conduit à la prise du liant hydraulique par l'enchevêtrement de ces cristaux en aiguilles, en épaississant et en affermissant, puis durcissant le milieu les contenant.

Comme l'usage de liant hydraulique ou de milieux en contenant se fait à l'air libre, et comme, en plus, la réaction de prise est exothermique, il est connu qu'une fraction de l'eau incorporée dans le liant ou dans le milieu en contenant s'évapore et qu'il y a, dès lors, un manque d'eau pour assurer la poursuite de la cristallisation lors de l'étape de durcissement au cours de laquelle le liant hydraulique ou le milieu le contenant acquiert toutes les caractéristiques mécaniques recherchées telles que, par exemple, un faible taux de retrait, une imperméabilité à l'eau, une résistance aux basses températures, une résistance mécanique importante.

Depuis longtemps, un défaut parmi les plus connus est l'apparition de fissures liées au retrait du mortier ou du béton contenant un liant hydraulique, au cours du durcissement, ce retrait étant très fréquemment la conséquence d'une perte d'eau par évaporation lorsque le milieu contenant le liant hydraulique, en particulier les mortiers et bétons, est soumis à l'action simultanée de l'exothermicité développée par la prise, de son exposition au soleil et de l'existence d'une ventilation naturelle desséchante.

Divers moyens ont été utilisés pour suppléer ou empêcher une perte par évaporation d'une partie de l'eau incorporée dans les milieux contenant, parmi leurs constituants, un liant hydraulique tel que, en particulier, les mortiers et bétons.

Selon un premier type de moyens, un traitement classique et ancien, pour empêcher l'évaporation d'eau, consiste à maintenir au contact de la surface de mortiers et/ou de bétons fraîchement mis en place ou fraîchement démoulés, une ambiance d'humidité la plus permanente possible pendant le temps de prise, par la création d'un film d'eau entretenu ou par la mise en oeuvre d'un substrat textile à caractère spongieux, imbibé d'eau, ou encore par l'utilisation d'un film polymère déroulé sur ladite surface pour empêcher l'évaporation, en créant une ambiance de serre entre la surface à protéger et l'atmosphère.

Mais, ce premier type de moyens est peu pratiqué aujourd'hui sur les chantiers de constructions ou de rénovation importante tant il nécessite une surveillance attentive et, dès lors, mobilise de la main d'oeuvre le rendant particulièrement onéreux.

Selon un autre type de moyens, un film continu adhérent et protecteur est créé sur la surface des mortiers et/ou des bétons en y déposant, par pulvérisation ou par brossage, une paraffine seule ou associée à au moins une résine hydrocarbonée, en solution dans un solvant organique pour former une barrière entre ladite surface et l'atmosphère ambiante et empêcher ainsi que se produise le phénomène d'évaporation de l'eau présente dans la composition des mortiers et/ou bétons.

Toutefois, ce type de moyens manifeste plusieurs inconvénients qui peuvent rendre rédhibitoire son exploitation. Parmi les inconvénients les plus importants peuvent être cités, par exemple :
- l'emploi de solvants organiques qui constitue un danger pour l'environnement, surtout quand sont mis en oeuvre des solvants à caractère cancérigène tel que le benzène, le toluène et d'autres solvants aromatiques ou encore des solvants halogénés tels que des hydrocarbures chlorés (trichloroéthylène ou perchloroéthylène),
- l'incompatibilité des solvants organiques avec l'eau qui oblige à attendre, pour la création du film protecteur sur la surface à protéger, que l'humidité de cette surface soit la plus faible possible, ledit film étant créé dès lors que la prise des mortiers et/ou bétons est déjà bien amorcée. En conséquence, la création du film est trop tardive et souvent inopérante car l'évaporation de l'eau, qui doit être empêchée, est également engagée, voire bien avancée ;

Enfin, selon un autre type de moyens, un film continu et protecteur est créé sur la surface des mortiers et/ou des bétons fraîchement mis en place ou fraîchement démoulés en y déposant, par pulvérisation ou par brossage, une émulsion dans l'eau d'une paraffine seule ou associée à au moins un autre composé tel que une résine hydrocarbonée, une huile hydrocarbonée et/ou une charge pigmentaire et/ou des alcools gras et/ou des acides gras, pour former, d'une manière précoce au début de la prise, une barrière entre ladite surface et l'atmosphère ambiante et empêcher ainsi que se produise le phénomène d'évaporation de l'eau intervenant dans la composition des mortiers et/ou bétons. Cette émulsion a en commun avec les mortiers et bétons la présence de l'eau qui rend compatible et particulièrement intéressant ce type de traitement anti-évaporation.

Mais, les deux derniers types de moyens utilisés pour traiter les surfaces de mortiers et/ou de bétons fraîchement mis en place ou fraîchement démoulés, afin d'assurer la rétention d'eau nécessaire à leur prise et à leur durcissement, génèrent de nouveaux inconvénients qui constituent des défauts majeurs quand il s'agit de recouvrir les surfaces ainsi traitées par des matériaux de finition, tels que par exemple les revêtements de plâtre, peintures, enduits de façade, des céramiques ou autres ...

Il apparaît en effet que :
- la dégradation mal contrôlée, incomplète et irrégulière du film créé pour former barrière à l'évaporation, dégradation provoquée par l'action du rayonnement ultraviolet, laisse des résidus importants dudit film de protection adhérant à la surface traitée ;
- des résidus du film dégradé adhérant à la surface traitée diminuent les capacités d'adhésion à ladite surface, des matériaux de finition tels que les revêtements de plâtre, peintures, colles pour céramiques et autres, au moment où commencent les travaux de finition ;
- pour obtenir une adhésion suffisante des matériaux de finition à ladite surface ainsi traitée, il se révèle absolument nécessaire de brosser, gratter ou poncer ladite surface avant de commencer les travaux de finition pour en éliminer les résidus de film de protection encore adhérent. Relevant du dernier type de moyens, de nombreux documents décrivent des compositions en émulsion dans l'eau destinées au traitement de surfaces de mortiers et/ou bétons fraîchement mis en place ou fraîchement démoulés, dont la fonction est d'empêcher l'évaporation de l'eau intervenant dans la formation desdits mortiers et bétons.

Le brevet US 2,928,752 décrit des émulsions aqueuses destinées à la protection des surfaces de mortiers et/ou bétons pendant la période de prise, puis au début de la période de durcissement, pour éviter l'évaporation d'eau, ces émulsions comprenant une paraffine, un produit de réaction fait d'oxyde d'éthylène et d'alcool oléique insaturé, un sel aminé d'acide carboxylique à longue chaîne en C₁₂ à C₁₈, un alcool gras à longue chaîne en C₁₂ à C₂₀ et, éventuellement, une faible quantité (0 à 10% en poids) d'une huile minérale intimement mélangée, quand elle est présente, à la paraffine fondue pour rendre cette paraffine plus malléable.

Ces compositions, dont l'inconvénient essentiel est d'être rendues complexes par le nombre de composants qui les forment, sont censées être rendues plus adhésives aux surfaces de mortiers et/ou de bétons à protéger de l'évaporation de l'eau grâce à la présence de la fonction amine ayant une affinité envers des composants des mortiers et/ou bétons.

Toutefois, ces compositions de revêtement protecteur des surfaces de mortiers et/ou de bétons pour empêcher l'évaporation de l'eau, comportent des inconvénients qui, outre la complexité de leurs formulations, sont, par exemple :
- la présence de fonctions alcool ou acide dans lesdites compositions, présence qui peut provoquer la création d'un retard de prise en surface du mortier et/ou du béton traité et/ou éventuellement créer une désactivation plus ou moins prononcée du mortier et/ou du béton selon les quantités de fonctions alcools ou acides présents ;
- une rétention d'eau souvent insuffisante dans les mortiers et/ou bétons traités en surface, entraînant des phénomènes de fissuration ;
- des manques d'adhérence des matériaux de finition appliqués sur les surfaces traitées au moyen desdites compositions.

Le brevet US 3,189,469 décrit des émulsions aqueuses à capacité réfléchissante quand elles sont appliquées sur les surfaces de mortiers et/ou bétons fraîchement mis en place ou fraîchement démoulés, destinées à protéger de l'évaporation de l'eau pendant la période de prise et le début du durcissement, qui se composent, en combinaison, d'une cire hydrocarbonée, qui est essentiellement de la paraffine, à raison de 15 à 50% en poids, d'un produit de réaction entre des acides gras saturés et insaturés en C₁₂ à C₂₂ et d'un agent alcalin tel qu'un hydroxyde alcalin ou une amine à raison de 1 à 10% en poids dudit produit, d'un pigment minéral à haut pouvoir réfléchissant, tel que du TiO₂, du CaCO₃, du ZnO ou du MgCO₃, à raison de 1 à 10% en poids et un agent dispersant non ionique et anionique à raison de 1 à 3% en poids.

Ces compositions sont censées être rendues plus adhérentes aux surfaces de mortiers et/ou bétons à protéger de l'évaporation de l'eau, grâce à la présence de la fonction amine ou du composé alcalin neutralisant la fonction acide des acides gras saturés et insaturés, cette fonction amine et ce composé alcalin ayant l'avantage d'avoir une affinité à l'égard des composants des mortiers et/ou bétons.

Malgré cet avantage, ces compositions de revêtement protecteur des surfaces de mortiers et/ou bétons pour empêcher l'évaporation de l'eau au cours de leur prise et de leur durcissement comportent des inconvénients qui sont, par exemple :
- la complexité de leur formulation ;
- la présence de fonctions acides apportées par les acides gras qui peut provoquer l'apparition d'un retard de prise en surface des mortiers et/ou bétons traités et/ou éventuellement qui peut créer une désactivation plus ou moins prononcée du mortier et/ou du béton selon les quantités de fonctions acides présentes ;
- la présence d'un pigment tel que le TiO₂ pour procurer aux dites compositions une capacité de haute réflectance susceptible d'être une aide pour diminuer l'évaporation de l'eau en surface des mortiers et/ou bétons au cours de la prise et du durcissement ;
- une rétention d'eau à considérer comme insuffisante ;
- les manques d'adhérence des matériaux de finition appliqués sur les surfaces traitées, conséquence de la présence dans lesdites compositions de fonctions acides.

Le brevet US 4,239,540 décrit une émulsion aqueuse pour la protection des surfaces de mortiers et/ou bétons fraîchement mis en place ou fraîchement démoulés, pour empêcher l'évaporation d'eau pendant la période de prise, puis de durcissement, qui se compose d'une paraffine (18,2% en poids), d'un mélange d'huiles formé d'une huile de coco (4,2% en poids), d'une huile de soja (3,3% en poids), d'une huile de lin (4,2% en poids), d'acides stéariques (3,4% en poids), d'acide héxacosanique (1,6% en poids), de l'eau (62,5% en poids) et d'un ester d'éthyle et d'acide cyanurique (2,6% en poids) comme agent émulsifiant.

Cette émulsion aqueuse de composition très particulière, qui pourrait sembler intéressante pour le traitement de prévention contre l'évaporation de l'eau des surfaces de mortiers et/ou bétons au moment de la prise et du durcissement, paraît non exploitable tant les résultats énoncés montrent sa très faible capacité à être un rétenteur d'eau (0,027 à 0,038 g d'eau/cm²) . En outre, cette émulsion aqueuse contient des acides organiques dont la fonction acide peut provoquer :
- une désactivation plus ou moins prononcée du mortier et/ou béton sur lesquelles ladite émulsion est déposée, en provoquant des pertes d'adhérence pour les matériaux de finition appliqués sur les surfaces traitées ;
- l'apparition d'un retard de prise en surface desdits mortiers et/ou bétons traités ;
- les manques d'adhérence des matériaux de finition appliqués sur les surfaces traitées.

Le brevet US 4,495,319 divulgue une méthode de préparation d'une émulsion destinée au traitement de cure de surfaces de mortiers et/ou bétons fraîchement mis en place ou fraîchement démoulés pour empêcher l'évaporation de l'eau présente à la surface desdits mortiers et/ou bétons au cours de la période de prise et de la période de durcissement. Cette émulsion est formée à partir de résine hydrocarbonée, de paraffine, d'agents émulsifiants obtenus à partir d'acides gras et de morpholine. La présence de pigments tels que du TiO₂ et/ou de charge minérale telle que du CaCO₃, utilisé comme pigment, est également divulguée.

Toutefois, cette émulsion présente le désavantage d'être composée de matières solides à la température ambiante, c'est-à-dire de paraffine et de résine hydrocarbonées à l'état solide, rendant difficile la préparation de l'émulsion et conduisant à une émulsion qui peut être instable et à une exploitation comme film de protection contre l'évaporation de l'eau de surface des mortiers et/ou bétons fraîchement mis en place ou fraîchement démoulés assez décevante : la capacité de cette émulsion à empêcher une perte d'eau par évaporation apparaît insuffisante quand bien même cette émulsion contiendrait un pigment pour en augmenter la réflectance et, dès lors, pour essayer d'augmenter son efficacité. De plus, un autre inconvénient se manifeste par l'apparition d'un manque d'adhérence des matériaux de finition appliqués sur les surfaces traitées.

La demande de brevet FR 2691962 A décrit des émulsions aqueuses de paraffine et de résines hydrocarbonées naturelles ou synthétiques, en particulier des résines de pin qui sont destinées à être appliquées sur des surfaces de mortiers et/ou bétons fraîchement mis en place ou fraîchement démoulés, pour limiter l'évaporation de l'eau pendant la période de prise et le début du durcissement. Ces émulsions sont composées de matières solides à la température ambiante. Toutefois, l'utilisation de ces émulsions comme film de protection contre l'évaporation de l'eau de surface des mortiers et/ou bétons fraîchement mis en place ou fraîchement démoulés, apparaît non satisfaisante au regard des résultats énoncés (52,8% après deux heures, très inférieurs aux 85% de la paraffine seule) et est à l'origine de manque d'adhérence pour les matériaux de finition appliqués ultérieurement sur les surfaces traitées.

Un autre document DE 197 35 431 C décrit un produit de traitement aqueux pour béton humide caractérisé par un mélange se composant de 10,0 à 30,0 % en poids de dispersion copolymère d'acrylate de butyle aqueux exempt de plastifiant ou de dispersion copolymère de méthacrylate aqueux (a), de 1,0 à 10,0 % en poids de solution de silicates de soude et de potasse, de 0,1 à 2,0 % en poids d'agent antimousse, de 0,2 à 4,0 % en poids d'agent thixotrope, de 0,1 à 10,0 % en poids de cire polyéthylène micronisée et de 88,6 à 44,0 % en poids d'eau, pour réaliser un revêtement étanche à l'eau et à la vapeur sur la surface de béton frais et sur la surface de béton vert des éléments de construction bétonnés.

Ce produit de traitement aqueux pour béton humide forme un revêtement étanche à l'eau, qui adhère aux surfaces de bétons frais à protéger de l'évaporation de l'eau et les protège du dessèchement et des dégradations occasionnées par les pluies diluviennes.

Toutefois, ce produit de traitement aqueux formant un revêtement protecteur des surfaces de bétons frais pour empêcher l'évaporation de l'eau au cours de leur prise et de leur durcissement ne présente aucune difficulté d'enlèvement ou de nettoyage une fois le béton recouvert entièrement durci, de manière à dégager de nouveau la surface de béton brute.

Cette facilité d'enlèvement du revêtement protecteur, une fois le béton durci, indique une résistance mécanique faible dudit revêtement lors d'une adhésion des matériaux de finition sur les surfaces traitées.

Par conséquent, il apparaît nécessaire d'enlever ou de supprimer ce revêtement protecteur, créé pour former barrière à l'évaporation, avant de commencer les travaux de finition sur la surface de béton brute pour obtenir une adhésion importante entre des matériaux de finition destinés à le recouvrir et le béton durci.

### Objets de l'invention

Comme l'état de la technique le révèle, les émulsions aqueuses proposées et destinées à être appliquées sur des surfaces de mortiers et/ou de bétons fraîchement mis en place ou fraîchement démoulés pour limiter l'évaporation de l'eau dès le début de prise présentent de nombreux inconvénients.

C'est pourquoi les objets assignés à l'invention sont nombreux et multiples, à la hauteur des inconvénients précités pour y apporter au moins une amélioration.

Les divers objets assignés à l'invention sont la création de compositions organiques qui sont des émulsions aqueuses dotées des caractéristiques essentielles nécessaires et recherchées pour qu'elles soient appliquées sur des surfaces de mortiers et/ou bétons fraîchement mis en place ou fraîchement démoulés et, qu'une fois appliquées, elles limitent et, préférentiellement, empêchent l'évaporation de l'eau, absolument nécessaire à leur prise et à leur durcissement.

Parmi les caractéristiques essentielles assignées aux émulsions aqueuses selon l'invention, certaines d'entres elles sont précisées à titre illustratif. Ainsi, les émulsions aqueuses selon l'invention :
- doivent être formées de la paraffine habituellement présente et d'autres composés hydrocarbonés émulsionnables en milieu aqueux ;
- ne doivent pas comporter de composés susceptibles de désactiver les surfaces des mortiers et/ou les bétons les recevant, qui affaibliraient leur capacité d'adhésion pour les matériaux de finition recouvrant ultérieurement ces surfaces ;
- doivent être exemptes de composés susceptibles de retarder, en surface, la prise des mortiers et/ou les bétons qui en sont recouverts ;
- doivent être faciles à préparer et stables après leur préparation ;
- doivent être d'une application facile sur les surfaces à traiter, préférentiellement par pulvérisation ;
- doivent être appliquées très rapidement sur les surfaces de mortiers et/ou bétons fraîchement mis en place ou fraîchement démoulés pour assurer efficacement une rétention de l'eau de composition ;
- doivent pouvoir apporter, aux dites surfaces traitées, une protection contre l'évaporation de l'eau supérieure à celle de la paraffine seule, par formation d'un film barrière à ladite évaporation ;
- ne doivent pas contenir de composés particulièrement néfastes pour l'environnement ;
- doivent être exemptes de composés cancérigènes tels que, en particulier, le benzène, le toluène, le xylène ;
- doivent également former à la surface des mortiers et/ou bétons fraîchement mis en place ou fraîchement démoulés, non seulement un film barrière à l'évaporation, mais aussi un film fortement adhérent à la surface traitée, après prise et durcissement desdits mortiers et/ou bétons ;
- doivent permettre, qu'il y ait ou non dégradation même partielle du film barrière, une adhérence très améliorée pour les matériaux de finition appliqués sur les surfaces recouvertes au film, sans qu'il y ait nécessité de l'éliminer desdites surfaces avant que ces surfaces soient recouvertes des matériaux de finition.

### Sommaire de l'invention

Selon l'invention, les émulsions aqueuses destinées à être appliquées sur des surfaces de mortiers et/ou de bétons fraîchement mis en place ou fraîchement démoulés pour empêcher l'évaporation de l'eau dès le début de prise et créer sur lesdites surfaces une capacité d'adhésion forte pour les matériaux de finition à y déposer, éliminent au moins partiellement les inconvénients manifestés dans l'état de la technique et apportent, en outre, de substantielles améliorations inexistantes dans les moyens décrits jusqu'à ce jour pour rendre les émulsions particulièrement efficaces dans le rôle qui leur est assigné.

Selon l'invention, les compositions destinées à être appliquées sur des surfaces de mortiers et/ou de bétons fraîchement mis en place ou fraîchement démoulés pour, à la fois, empêcher l'évaporation de l'eau présente dans lesdits mortiers et/ou bétons, et nécessaire à leur prise, puis à leur durcissement et créer sur lesdites surfaces traitées, une capacité d'adhésion forte pour les matériaux de finition destinés à les recouvrir, se présentent sous la forme d'émulsions aqueuses comprenant au moins une paraffine (a) seule ou associée à au moins un autre composé hydrocarboné (b) et/ou composé hydrocarboné (c) tel qu'une cire ou une huile hydrocarbonée, solide ou liquide, à température ambiante, comprennent également au moins un latex formé d'une émulsion aqueuse colloïdale d'au moins un polymère et au moins une charge pulvérulente d'origine minérale et/ou organique.

Par composé hydrocarboné, il faut entendre tout composé organique essentiellement composé de carbone et d'hydrogène et pouvant également contenir l'un au moins des éléments de l'oxygène, de l'azote, du soufre et du phosphore.

Selon l'invention également, les compositions destinées à être appliquées sur des surfaces de mortiers et/ou de bétons fraîchement mis en place ou fraîchement démoulés, pour, à la fois, empêcher l'évaporation de l'eau présente dans lesdits mortiers et/ou bétons et nécessaire à leur prise, puis à leur durcissement et créer sur lesdites surfaces traitées une capacité d'adhésion forte pour les matériaux de finition destinés à les recouvrir, se présentent sous la forme d'émulsions aqueuses comprenant, selon une combinaison nouvelle de moyens, au moins une paraffine (a) seule ou associée à au moins un composé hydrocarboné (b) et/ou à au moins un autre composé hydrocarboné (c) différent du composé hydrocarboné (b), au moins un latex (d) formé d'une émulsion aqueuse colloïdale d'au moins un polymère, et au moins une charge pulvérulente d'origine minérale et/ou organique(e).

Plus particulièrement et selon l'invention, les compositions destinées à être appliquées sur des surfaces de mortiers et/ou de bétons fraîchement mis en place ou fraîchement démoulés, avant le début de prise, dans le but de les rendre à la fois synergique, pour empêcher l'évaporation de l'eau nécessaire à leur prise et à leur durcissement et créer sur lesdites surfaces une capacité d'adhésion forte des matériaux de finition, se présentent sous la forme d'émulsion aqueuse, comprenant au moins une paraffine associée à au moins un autre composé hydrocarboné, et se caractérisent en ce que elles se composent :
a) d'au moins une paraffine d'origine pétrolière ou de synthèse renfermant, en mélange, des hydrocarbures saturés et insaturés aliphatiques de formules générales CₙH₂ₙ₊₂ et CₙH₂ₙ pour lesquels n est au moins égal à 30 et dont le point de fusion est compris entre 40°C et 75C ;
b) d'au moins un composé hydrocarboné qui est une huile hydrocarbonée linéaire et/ou cyclique, d'origine aliphatique et/ou naphténique, formées de chaînes hydrocarbonées, seules ou en mélange, de formules générales CₙH₂ₙ₊₂ et CₙH₂ₙ pour lesquelles n est inférieur à 30 ; et/ou
c) d'au moins un composé hydrocarboné qui est une huile formée d'au moins un ester résultant de la réaction de condensation d'un acide gras saturé et/ou insaturé avec un alcool ayant de une à cinq fonctions hydriques ;
d) d'au moins un latex formé d'une émulsion aqueuse colloïdale d'au moins un polymère et/ou copolymère choisi dans le groupe constitué par les homopolymères d'acide acrylique, d'acide méthacrylique, et des esters de ces acides dont le groupement ester est en C₁ à C₁₂, les copolymères d'acide acrylique, d' acide méthacrylique et/ou des esters de ces acides dont le groupement ester est en C₁ à C₁₂, les copolymères de vinyle et d'acide acrylique ou d'acide méthacrylique, les copolymères de vinyle et d'esters en C₁ à C₁₂, les copolymères d'acide acrylique ou méthacrylique, les copolymères d'acide acrylique ou d'acide méthacrylique et d'esters acryliques ou méthacryliques, des copolymères de styrène-acrylique ou méthacrylique, les copolymères d'éthylène et d'acétate de vinyle, les copolymères d'éthylène et d'acide acrylique ou méthacrylique, les copolymères acryliques/uréthane, les copolymères styréne/butadiène ;
e) d'au moins une charge pulvérulente d'origine minérale ou organique.

### Description détaillée de l'invention

Les compositions selon l'invention, destinées à être appliquées sur des surfaces de mortiers et/ou de bétons fraîchement mis en place ou fraîchement démoulés avant le début de prise pour empêcher l'évaporation de l'eau nécessaire à leur prise, sont :
- des émulsions aqueuses de paraffine, de composés hydrocarbonés, en particulier des huiles, de latex et de charges minérales ;
- synergique à l'égard de la rétention d'eau et à l'égard de l'augmentation de la capacité d'adhésion à travers leurs composants et les quantités relatives engagées de ces divers composants.
- stables au stockage, même de longue durée.

Selon l'invention, les compositions destinées à la fois, par leur présence sur des surfaces de mortiers et/ou bétons fraîchement mis en place ou fraîchement démoulés, à empêcher l'évaporation de l'eau et à octroyer aux dites surfaces traitées une capacité d'adhésion renforcée pour les matériaux de finition destinés à les recouvrir sont des émulsions aqueuses à base de paraffine. Or, une émulsion est, par définition, une dispersion d'un composé liquide ou rendu liquide dans un autre composé liquide. Dans le cas de l'invention, le composé paraffinique, dit composant (a), qui, à une température ambiante, est un composé solide non miscible à l'eau, est rendu liquide par une légère élévation de température et à la fois dispersé dans l'eau portée à une température appropriée pour la formation d'une émulsion sous forte agitation. Toutefois, le composé paraffinique peut se présenter déjà sous la forme d'une émulsion aqueuse commercialisée et être utilisé dans cet état pour la préparation des compositions selon l'invention.

La paraffine peut être mise en oeuvre dans le cadre de l'invention seule ou associée à au moins un autre composé hydrocarboné pour la réalisation de l'émulsion précitée.

Ladite paraffine est choisie dans le groupe constitué par des alcanes et/ou alcènes, pris seuls ou en mélange, qui sont des hydrocarbures saturés et/ou insaturés, d'origine pétrolière ou de synthèse, de formules générales CₙH₂ₙ₊₂ et CₙH₂ₙ pour lesquelles n est au moins égal à 30 et est préférentiellement compris entre 30 ≤ n ≤ 120 et dont le point de fusion est compris entre 40°C et 75°C et préférentiellement compris entre 50°C et 70°C.

D'après la valeur de "n" et les quantités relatives d'alcanes et alcènes formant la paraffine mise en oeuvre, la densité de ladite paraffine est comprise entre 0,85 et 0,95 et préférentiellement comprise entre 0,88 et 0,92.

Pour éviter que l'émulsion réalisée par la dispersion de la paraffine fondue dans de l'eau donne un effet de coalescence, c'est-à-dire que la paraffine et l'eau se séparent en deux couches, un agent émulsifiant facilitant la stabilité de l'émulsion peut être introduit dans ladite émulsion, cet agent étant capillairement actif et se plaçant, par suite d'un phénomène d'adsorption, à la surface de séparation des micro-gouttelettes de paraffine et d'eau en les enveloppant d'un film interfacial.

Un tel agent émulsifiant peut être de nature anionique et/ou non-ionique. Il peut être choisi parmi les produits émulsifiants bien connus tels que les acides gras, en C₉ à C₂₂ neutralisés par une amine, en particulier la triéthanolamine, des composés sulfonés, phosphonés ; des alcools gras, des esters de sorbitan, des copolymères oxyde d'éthylène - oxyde de propylène, ou autres. De tels agents émulsifiants sont, par exemple, commercialisés par SEPPIC sous le nom de Simulsol, Montane, Montanox et par LAMBERT-RIVIERE sous le nom de Syntopon.

Des émulsions de paraffine dans l'eau, dont la paraffine répond aux caractéristiques précitées, sont commercialisées, par exemple, par Exxon-Mobil Oil sous les noms de marques Mobilcer 115, Mobilcer 730, Mobilcer C, Prowax 397, Mobilwax 2370 ou encore par Suddentsche Musions Chemise sous les noms de marques Wukonil KN 50, WukoTlil LP 50, Wukonil LP 38 ou par Michelman sous le nom de marque ME91240E.

Les compositions selon l'invention peuvent également contenir, outre la paraffine, au moins un autre composé hydrocarboné à l'état solide ou liquide à la température ambiante, qui peut être choisi dans le groupe constitué par les cires et/ou huiles hydrocarbonées naturelles ou synthétiques, telles que les huiles d'huile de pin, de colophane, des huiles dites végétales telles que, l'huile de colza, l'huile de tournesol, l'huile de palme, les huiles dites minérales telles que des huiles paraffiniques ou naphténiques.

Préférentiellement, les compositions selon l'invention peuvent contenir, au titre d'un autre composé hydrocarboné, au moins une huile hydrocarbonée, dite composant (b), d'origine pétrolière de type aliphatique et/ou naphténique et, dans ce dernier cas, issues de la série des cyclo-pentanes et des cyclohexanes, qui sont des hydrocarbures, présentes seules ou en mélanges, saturées et/ou insaturées, de formules générales CₙH₂ₙ₋₂ et/ou CₙH₂ₙ pour lesquelles n est inférieur à 30 et est préférentiellement compris entre 10 et 25, ces huiles hydrocarbonées étant dans un état liquide à la température ambiante.

Toutes ces huiles ont, sous des conditions normales de température et de pression, une viscosité cinématique comprise entre 5 et 500 mm²/s et une densité comprise entre 0,83 et 0,97.

Comme huile hydrocarbonée d'origine aliphatique et/ou naphténique, il est possible d'indiquer, à titre d'exemple, l'huile de type Neutral, commercialisée par Exxon-Mobil, qui a une viscosité cinématique égale à 20 mm²/s, ou les huiles HMVIP 30, HVI 65 commercialisées par Shell, 60 Neutral, 80 Neutral, 150 Neutral commercialisées par Exxon-Mobil.

Les compositions selon l'invention peuvent contenir également, associées à ou en remplacement du composé hydrocarboné (b), au moins un autre composé hydrocarboné différent de (b) qui peut être une huile liquide à la température ambiante, qui peut être formée d'un ester résultant de la réaction de condensation d'un acide gras saturé et/ou insaturé avec un alcool mono, di ou trihydrique, constituant le composant (c).

Les acides gras entrant dans la formation de l'ester selon l'invention sont des composés hydrocarbonés, saturés et/ou insaturés, ramifiés ou non, provenant par exemple de l'hydrolyse d'huiles et de corps gras, portant préférentiellement une seule fonction acide carboxylique. Ils sont généralement choisis, par exemple, dans le groupe constitué par les acides gras en C₉ à C₂₄, tels que, par exemple, l'acide caprylique, caprique, laurique, myristique, palmitique, stéarique, arachidique, béhénique, lignocérique, palmitoléique, oléique, gadaléique, érucique, linoléique, linolénique, isolinolénique.

Les alcools entrant dans la formation de l'ester selon l'invention sont des composés hydrocarbonés comportant de une à cinq fonctions alcool en C₂ à C₂₀. Ces alcools peuvent être choisis dans le groupe constitué par les alcanols et/ou les alcénols tels que, par exemple, l'éthanol, le propanol, le butanol, le pentanol, l'alcool stéarique, l'alcool oléique quand il s'agit d'utiliser un alcool monohydrique, dans le groupe constitué, par exemple, par les propane diol, butane diol, pentane diol, hexane diol, heptane diol, octane diol, nonane diol, décane diol, undécane diol et dodécane diol et autres dihydroxyalcanes ou alcènes, quand il s'agit d'utiliser un alcool dihydrique, et/ou dans le groupe constitué par le glycérol, les butane triol, pentane triol, hexane trio, heptane triol, octane triol, nonane triol, décane triol, undécane triol, dodécane triol et autres trihydroxyalcanes ou alcènes quand il s'agit d'utiliser un alcool trihydrique, ou encore le propane-ltri-2di-ol quand s'agit d'utiliser un alcool à cinq fonctions hydriques,

Les compositions selon l'invention contiennent aussi, associés au composant (a) qu'est la paraffine et, éventuellement associés aux autres composés hydrocarbonés tels que les composants (b) et/ou (c), un autre composant (d) formé d'au moins un latex qui est constitué d'une émulsion aqueuse colloïdale d'au moins un polymère et/ou copolymère choisi dans le groupe constitué par les homopolymères d'acide acrylique, d'acide méthacrylique, et des esters de ces acides dont le groupement esters est en C1 à C12, tels que méthyle, éthyle, propylée, butyle, pentyle, hexyle, heptyle, octyle, 2-ethyle-hexyle, 2-ethyle-butyle, 2-heptyle-hexyle,par les copolymères d'acide acrylique, d'acide méthacrylique et/ou des esters de ces acides dont le groupement esters est en C₁ à C₁₂, les copolymères de vinyle et d'acide acrylique ou d'acide méthacrylique, les copolymères de vinyle et d'esters en C₁ à C₁₂, les copolymères d'acide acrylique ou méthacrylique, les copolymères d'acide acrylique ou d'acide méthacrylique et d'esters acryliques ou méthacryliques, des copolymères de styrène-acrylique ou méthacrylique, les copolymères d'éthylène et d'acétate de vinyle, les copolymères d'éthylène et d'acide acrylique ou méthacrylique, les copolymères acryliques/uréthane, les copolymères styrène/butadiène.

Ces divers latex contiennent de 10% à 80% en poids du polymère et/copolymère mis en oeuvre dans le cadre de l'invention.

Les compositions selon l'invention contiennent également en association avec le composant (a) qu'est la paraffine et le composant (d) qu'est le latex, et éventuellement associés à au moins un autre composé hydrocarboné, tels que les composants (b) et/ou (c), au moins une charge pulvérulente d'origine minérale ou organique, dont la granulométrie médiane est comprise entre 1 µm et 100 µm et dont la répartition est comprise entre 0 µm et 300µm.

La charge minérale pulvérulente est préférentiellement choisie dans le groupe constitué par le carbonate de calcium, des argiles et le kaolin, l'alumine, la silice pyrogénée ou non, la fumée de silice, le sulfate de baryum, utilisés seuls ou en mélange.

Cette charge minérale pulvérulente a une surface spécifique BET d'au moins 1 m²/g et préférentiellement comprise entre 20 m²/g et 700 m²/g, étant précisé que la surface spécifique BET de cette charge minérale pulvérulente est d'autant plus efficace que ladite surface spécifique est élevée.

La charge organique pulvérulente est préférentiellement choisie dans le groupe constitué, par exemple, par les poudres de polymères, copolymères, élastomères, thermoplastiques ou thermodurs, mis en oeuvre seuls ou en mélange. Les charges pulvérulentes minérales et organiques peuvent être mises en oeuvre seules ou en mélange.

Les compositions selon l'invention, réalisées au moyen des composants (a), (b) et/ou (c), (d) et (e) que sont :
- les paraffines d'origine pétrolière ou de synthèse renfermant en mélange des hydrocarbures saturés de formule générale CₙH₂ₙ₊₂ et/ou insaturés de formule générale CₙH₂ₙ avec n ≥ 30 ;
- d'au moins un autre composé hydrocarboné qui peut être une huile hydrocarbonée linéaire et/ou cyclique, d'origine aliphatique et/ou naphténique, qui sont des chaînes hydrocarbonées, seules ou en mélange, de formules générales CₙH₂ₙ₊₂ et CₙH₂ₙ pour lesquelles n est inférieur à 30 ;
- éventuellement au moins un autre composé hydrocarboné choisi dans le groupe des cires et/ou des huiles hydrocarbonées ;
- au moins un latex formé d'une émulsion aqueuse colloïdale d'au moins un polymère et/ou copolymère ;
- et au moins une charge pulvérulente d'origine minérale ou organique.
sont des compositions synergique destinées à être appliquées sur des surfaces de mortiers et/ou de bétons fraîchement mis en place ou fraîchement démoulés, pour empêcher l'évaporation de l'eau nécessaire à leur prise et à leur durcissement, dont le caractère synergique s'affirme à travers leur capacité à la fois à empêcher l'évaporation d'eau et à procurer aux surfaces traitées une adhésion très améliorée pour les matériaux de finition.

Ce caractère synergique est atteint dès lors que les divers composants de ces compositions en émulsions aqueuses sont présents, en pourcentage de matières actives (ou matières sèches) à raison de :
- composant (a) ou paraffine ; de 2% à 90% en poids, préférentiellement de 5% à 60% en poids, très préférentiellement de 5% à 40% en poids ;
- composant (b) ou composé hydrocarboné : de 5% à 90% en poids, préférentiellement de 6% à 40% en poids, très préférentiellement de 9% à 30% en poids ;
- composant (c) ou composé hydrocarboné autre que le composé (b) : de 5% à 90% en poids, préférentiellement de 10% à 50% en poids, très préférentiellement de 15% à 40% en poids ;
- composant (d) ou latex formé d'au moins un polymère et/ou copolymère en émulsion dans l'eau de 10% à 45% en poids et préférentiellement de 15% à 35% en poids ;
- composant (e) ou charge pulvérulente d'origine minérale ou organique : de 0,01% en poids à 10% en poids et préférentiellement de 0,02% en poids à 5% en poids ;
- eau : Q.S.P. à 100% en poids.

Préférentiellement, quand les composants (b) et/ou (c) sont choisis parmi les composés hydrocarbonés liquides à la température ambiante :
- le composant (b) est choisi parmi les huiles hydrocarbonées linéaires et/ou cycliques, d'origine aliphatique et/ou naphténique, qui sont des chaînes hydrocarbonées, seules ou en mélange, de formules générales CₙH₂ₙ₊₂ et CₙH₂ₙ pour lesquelles n est inférieur à 30 ;
- le composant (c) est choisi parmi les huiles formées d'au moins un ester résultant de la réaction de condensation d'un acide gras saturé et/ou insaturé avec un alcool mono, di ou trihydrique.

Les compositions selon l'invention, réalisées au moyen des composants (a), (b) et/ou (c), (d) et (e) sont en état de synergie quand les compositions sont appliquées sur des surfaces de mortiers et/ou de bétons fraîchement mis en place ou fraîchement démoulés, dès lors que, d'une manière simultanée, elles empêchent l'évaporation de l'eau, nécessaire à leur prise et à leur durcissement, infiniment mieux que les émulsions de paraffines seules ou d'huiles seules et procurent aux dites surfaces ainsi traitées une capacité d'adhésion très améliorée des matériaux de finition qui doivent les recouvrir.

Ce caractère synergique est atteint dès lors que les divers composants de ces compositions ou émulsions aqueuses sont présents, en pourcentage de matières actives (ou matières sèches) à raison de :
- composant (a) ou paraffine : de 2% à 90% en poids, préférentiellement de 5% à 60% en poids, très préférentiellement de 5% à 40% en poids ;
- composant (b) ou huile hydrocarbonée : de 5% à 90% en poids, préférentiellement de 8% à 40% en poids, très préférentiellement de 9% à 30% en poids ;
- composant (c) ou huile formée d'au moins un ester : de 5% à 90% en poids, préférentiellement de 10% à 50% en poids, très préférentiellement de 15% à 40% en poids ;
- composant (d) ou latex formé d'au moins un polymère et/ou copolymère en émulsion dans l'eau de 10% à 45% en poids et préférentiellement de 15% à 35% en poids ;
- composant (e) ou charge pulvérulente d'origine minérale ou organique : de 0,01% en poids à 10% en poids et préférentiellement de 0,02% en poids à 5% en poids ;
- eau : QSP à 100% en poids.

De plus, le rapport pondéral en matière active sèche du cumul des composants (b) et/ou (c) et de la paraffine présentes dans les émulsions aqueuses des compositions selon l'invention doit être au moins égal à 0,25, peut être préférentiellement au moins égal à 0,63 et peut varier très préférentiellement entre 0,64 et 9.

Les compositions selon l'invention, sous forme d'émulsions aqueuses, ont une teneur en matière sèche qui peut varier, en général, de 10% à 60% en poids, mais de préférence de 30% à 50% en poids.

Lesdites compositions sous forme d'émulsions aqueuses sont utilisées par pulvérisation sur les surfaces à protéger, la charge utile déposée par unité de surface étant comprise entre 50 g/m² et 150 g/m² pour atteindre une rétention d'eau au moins égale à 90% en poids de la quantité d'eau perdue par le témoin non traité.

Les compositions selon l'invention, qui sont des émulsions aqueuses, sont stables au stockage, même prolongé.

De plus, quand ces compositions selon l'invention sont mises en oeuvre, elles se révèlent avoir une très grande efficacité car, par opposition aux compositions de l'état de la technique, elles nécessitent une quantité de matière sèche active déposée par m² à protéger infiniment plus faible, les rendant ainsi à la fois très efficaces et très économiques.

L'invention concerne également un procédé de préparation des compositions de protection contre l'évaporation d'eau de surfaces de mortiers et/ou bétons fraîchement mis en place ou fraîchement démoulés, qui comporte les étapes successives d'introduction des divers composants dans une zone de préparation très fortement soumise à agitation, dont le contenu peut être chauffé et/ou refroidi, ces étapes étant :
i) l'introduction, selon la quantité calculée, de l'eau, nécessaire à la création de l'émulsion, puis éventuellement celle d'un agent émulsifiant dans ladite zone, ce premier mélange étant soumis à forte agitation pendant le temps nécessaire à l'obtention d'un milieu homogéne ;
ii) l'introduction, selon les quantités calculées, du mélange des composants (b) et/ou (c), formant un deuxième mélange, qui est soumis à la même forte agitation pendant le temps nécessaire à l'obtention de la première émulsion ;
iii) l'introduction, selon la quantité calculée et sous agitation douce, de la paraffine dans le mélange résultant de ii) :
   - préalablement chauffée à une température suffisante pour provoquer la fusion et le passage à l'état d'émulsion de la paraffine quand ladite paraffine est introduite sous la forme d'une poudre très fine ; ou
   - à une température ambiante quand la paraffine est introduite sous la forme d'une émulsion aqueuse ;
   et maintien de l'agitation douce pendant le temps prolongé nécessaire à la formation de l'émulsion, avec un éventuel refroidissement de l'émulsion ;
iv) l'introduction, selon la quantité calculée et sous agitation douce, dans le mélange résultant de iii), du composant (d) qui est le latex, soumis à une agitation douce pendant le temps nécessaire à l'obtention de l'émulsion aqueuse formée des composants (a), (b), (c) et (d) ;
v) l'introduction, selon la quantité calculée et sous forte agitation, dans l'émulsion résultant de iv) du composant (e) qui est la charge pulvérulente minérale et/ou organique ;
vi) puis, soumission de l'émulsion résultant du deuxième mélange transformé en émulsion aqueuse issue de v) à une agitation douce pendant un temps prolongé pour homogénéiser l'émulsion aqueuse formée contenant tous les composants.

Cet ultime temps d'agitation douce de l'étape iv) ou vi) peut atteindre 90 minutes, voire le dépasser afin d'obtenir une émulsion dont la taille des gouttes est inférieure ou égale au micron.

L'invention sera mieux comprise grâce aux divers exemples ci-après présentés à titre illustratif, non limitatif.

Dans le cadre de ces exemples qui illustrent à la fois la capacité des compositions selon l'invention à empêcher l'évaporation de l'eau de mortiers et/ou bétons fraîchement mis en place ou fraîchement démoulés et à procurer aux surfaces traitées par lesdites compositions une capacité d'adhésion très améliorée pour les matériaux de finition les recouvrant, les tests d'adhérence auxquels sont soumises lesdites compositions sont définis ci-après :

### Fabrication du béton dont l'une des surfaces est traitée par la composition selon l'invention.

On réalise la fabrication d'un béton auto-plaçant adjuvanté, ayant la composition suivante en % en poids :
- granulat (référence) 78,5%
- liant hydraulique (référence) 12,5%
- adjuvant 1.5%
- eau 7,5%
l'étalement, mesuré au cône de 1 100 cm³ est compris entre 34 et 37 cm. Le béton ainsi réalisé est introduit dans des moules 40 x 40 x 8 en cm et la surface du béton est talochée pour obtenir une surface lisse.

Sont préparées ainsi des dalles de bétons de même compositions.

### Dépôt sur la surface lisse de béton de la composition selon l'invention

La composition de traitement est vaporisée à raison de 100 à 200g/m² sur ladite surface libre d'une dalle de béton préparée.

Une autre dalle de béton, réalisée en même temps que la première, forme la surface de référence, exempte de tout traitement de surface par la composition selon l'invention.

Revêtement des surfaces des dalles de bétons traitées par la composition selon l'invention et dalles non traitées.

Des carreaux en grés céramique sont collés sur la surface des dalles traitées et non traitées avec la composition selon l'invention deux semaines après la fabrication desdites dalles.

Les carreaux sont collés sur la surface des dalles au moyen d'un mortier-colle à carrelage (colle LANKO 554 commercialisée par la société Lafarge Mortiers).

Ce mortier-colle est appliqué selon la méthode opératoire qui consiste à utiliser :
- un peigne aux dents carrées 5 x 5 x 5 pour étaler le mortier-colle,
- une charge de 2kg déposée sur les carreaux en cours de collage, 10 carreaux étant collés par dalle,
- un temps de séchage de la colle-mortier qui est de 7 jours.

### Collage des tés d'arrachage sur les carreaux de céramique

Les tés d'arrachage sont collés un jour avant l'arrachage des carreaux au moyen de la colle LANKO 532.

### Arrachement des carreaux par l'intermédiaire des tés.

Les carreaux sont arrachés par l'intermédiaire des tés à l'aide d'un dynamomètre.

### Exemple 1

Cet exemple concerne des compositions de cure exemptes de latex et de charges minérales.

On a préparé, sous la forme d'une émulsion aqueuse, des compositions, formées de :
- paraffine : Redesmol 300 (marque déposée) commercialisée par la société REPSOL sous la forme d'une émulsion aqueuse à 63% d'extrait sec, Mobilcer 115 et Mobilcer 730 (marques déposées), commercialisées par la société MOBIL sous la forme d'émulsions aqueuses à respectivement 45% et 50% en poids d'extrait sec ;
- huile de type (b), qui est une huile paraffinique, de viscosité faible et égale à 20 mm²/s commercialisée par la société EXXON-MOBIL sous le nom de marque 60 NEUTRAL ;
- eau : QSP à 100% en poids.

Le mode de préparation a été le suivant :
Dans un réacteur approprié, on introduit d'abord la quantité d'eau nécessaire à la réalisation de la composition selon l'invention par la formation d'une émulsion aqueuse.

Quand la paraffine se présente sous l'aspect d'une émulsion aqueuse, la quantité d'eau initialement introduite tient compte de la quantité d'eau contenue dans l'émulsion aqueuse de paraffine.

Si nécessaire, un agent émulsifiant (tensio-actif) est introduit dans le volume initial d'eau, par exemple le Montanox 85 (marque déposée) commercialisé par la société SEPPIC.

L'eau initialement introduite est soumise, qu'elle contienne ou non un agent dispersant, à une agitation importante par un agitateur TURAX tournant à 20000 tours/minutes.

Sous cette agitation importante, l'huile de type (b) est introduite dans le volume aqueux en formant un mélange maintenu sous l'agitation importante pendant cinq minutes, pour former l'émulsion "huile dans l'eau".

Au terme de ces cinq minutes de forte agitation, ladite agitation est calmée, la vitesse de rotation du TURAX étant portée à 5000 tours/minute. Sous cette faible agitation, l'émulsion aqueuse de paraffine est introduite dans l'émulsion d'huile dans l'eau.

Quand l'introduction de l'émulsion aqueuse de paraffine est achevée, le mélange d'émulsions formé est soumis, pendant au plus 90 minutes, à une agitation douce, la vitesse de rotation du TURAX étant maintenue à 5000 tours/minute.

Au terme de ce temps final d'agitation, la composition est prête à être exploitée par pulvérisation, à raison de 100g/m² d'une composition contenant 50% en poids d'extrait sec.

Dix formules de compositions Ai (avec i = 1 à 10) ont été réalisées, dont les pourcentages en poids des composants sont donnés dans le tableau I ci-après.

**Tableau I**

| N° de la formule | % en poids du total de l'eau dans l'émulsion | % en poids d'extrait sec de paraffine | % en poids d'huile paraffinique de type (b) | % en poids d'extrait sec total |
|---|---|---|---|---|
| A 1 | 37,00 | 63,00 (1) | 0 | 63,00 |
| A 2 | 55,00 | 45,00 (2) | 0 | 45,00 |
| A 3 | 50,00 | 30,00 (2) | 20,00 | 50,00 |
| A 4 | 50,00 | 25,00 (2) | 25,00 | 50,00 |
| A 5 | 50,00 | 20,00 (2) | 30.00 | 50,00 |
| A 6 | 50,00 | 15,00 (2) | 35,00 | 50,00 |
| A 7 | 50,00 | 10,00 (2) | 40,00 | 50,00 |
| A 8 | 50,00 | 50,00 (3) | 0 | 50,00 |
| A 9 | 50,00 | 35,00 (3) | 15,00 | 50,00 |
| A 10 | 50,00 | 30,00 (3) | 20,00 | 50,00 |

| | | | | |
|---|---|---|---|---|
| (1) Paraffine Redesmol 300 (2) Paraffine Mobilcer 115 (3) Paraffine Mobilcer 730 | | | | |

Ces dix formules comportaient chacune, en plus, 1% en poids d'un agent émulsifiant (tensio-actif) qui est le Montanox 85.

Dans le tableau I précité, le pourcentage en poids d'eau, présente dans la composition selon l'invention, est le cumul de l'eau présente dans l'émulsion aqueuse de paraffine mise en oeuvre, et de l'eau introduite en supplément, le pourcentage en poids de paraffine étant ainsi exprimé en pourcentage en poids d'extrait sec, de même que le pourcentage en poids de l'huile paraffinique de type (b).

A titre de comparaison, les formules A1, A2, A8 de compositions en émulsion aqueuse ont été préparées, chacune contenant un type de paraffine mis en oeuvre seul ou mis en oeuvre dans les sept autres formules, afin de permettre des comparaisons expérimentales.

Les formules de chacune de ces compositions comparatives sont données dans le tableau II ci-après.

Des essais d'utilisation desdites compositions ont été conduits sous la forme d'une couche pulvérisée pour chacune d'entre elles, déposée sur la surface des dalles de bétons fraîchement mis en place ou fraîchement démoulés, mis en oeuvre pour assurer à la fois la rétention d'eau au sein desdits bétons au moment de la prise, puis de leur durcissement, et l'adhésion des carreaux de céramiques aux dites surfaces des dalles traitées (constituant les dalles d'essais) et des dalles non traitées (constituant des dalles témoins).

Ces essais de protection de surfaces et de renforcement des capacités d'adhésion ont été réalisés à dosage équivalent, ce dosage étant de 100 g/m² de chaque émulsion A1 à A10.

Les résultats de la rétention en eau et de la capacité d'adhésion renforcée ont été réunis dans le tableau II ci-après, sous la forme d'un coefficient de protection à 6 heures et 24 heures après la coulée du béton, qui indique le pourcentage en poids d'eau maintenu sur les surfaces traitées, et d'une valeur de traction en Mpa donnée par un dynamomètre à traction au moment où se produit l'arrachement de chaque carreau céramique.

**Tableau II**

| N° de la formule | Coefficient de protection pour les surfaces traitées | | Mesure de capacité d'adhésion aux surfaces traitées et non traitées | |
|---|---|---|---|---|
| | | | Valeur de traction en Mpa | |
| | à 6 heures | à 24 heures | Surface traitée | Surface non traitée |
| (Témoin) A1 | 91,7 | 86,9 | 0,93 | 1,33 |
| (Témoin) A2 | 26,0 | 17,1 | 0,76 | 1,33 |
| A3 | 99,3 | 96,7 | 0,36 | 1,5 |
| A4 | 100 | 96,5 | 0,24 | 1,5 |
| A5 | 95,6 | 93,0 | 0,16 | 1,5 |
| A6 | 93,6 | 91,5 | 0,46 | 1,5 |
| A7 | 90,5 | 88,6 | 0,32 | 1,5 |
| (Témoin) A8 | 18,0 | 14,7 | 0 | 1,68 |
| A9 | 95,7 | 91,2 | 0 | 1,68 |
| A10 | 90.1 | 87,6 | 0 | 1,68 |

Les remarques qui peuvent être tirées de ces deux tableaux sont les suivantes .
- il y a bien synergie en ce qui concerne la rétention d'eau dans les compositions car la comparaison des formules A3 à A7 ou A9 à A10 comportant la paraffine et l'huile, les formules A1, A2 et A8 pour la paraffine seule, montre que la présence simultanée de l'huile et de la paraffine dans la composition en émulsion aqueuse entraîne des résultats en matière de rétention d'eau très supérieurs aux résultats des témoins ;
- il se produit un phénomène de maximisation de la protection des surfaces traitées quand le rapport des pourcentages en poids d'huile sur les pourcentages en poids d'extrait sec de paraffine, dans les compositions, est très préférentiellement compris entre 0,64 et 9 ;
- les protections des surfaces traitées sont acquises avec une faible quantité en matière sèche active des compositions et ce, par rapport aux compositions témoin ;
- les capacités d'adhésion des formules A3 à A7 comportant paraffine et huile ne sont pas très satisfaisantes ;
- les formules contenant la paraffine Mobilcer 730 montrent une inefficacité à l'égard de la capacité d'adhésion.

### Exemple 2

Cet exemple concerne des compositions de cure comprenant des latex, mais exemptes de charges minérales,

On a préparé, sous la forme d'une émulsion aqueuse, des compositions selon l'invention, formées de :
- paraffine : Mobilcer 115 (marque déposée), commercialisée par la société MOBIL sous la forme d'une émulsion aqueuse à 45% en poids d'extrait sec ;
- huile de type (b), qui est une huile paraffinique, de viscosité faible et égale à 20 mm²/s commercialisée par la société MOBIL sous le nom de marque 60 NEUTRAL ;
- latex : Primal AC261 K commercialisée par Rohm et Haas, LS2 commercialisé par Goodyear ;
   - Mowiton M 360 commercialisé par Hoechst ;
   - Orgal PST 50 commercialisé par Organik Kimya ;
   - Plextol D498 ou B500 commercialisé par Carrechim ;
   - Vinamul 3249 commercialisé par Vinamul ;
   - Dowlatex 465 commercialisé par Lambert-Rivière,
   qui sont des polymères ou copolymères acryliques styrène/acrylique, acrylique/méthacrylate, acétate de vinyle/éthylène, styréne/butadiène ;
- eau : QSP à 100% en poids.

Le mode de préparation des compositions est le même que celui décrit dans l'exemple 1, étant entendu toutefois, qu'après l'achèvement de l'introduction de l'émulsion aqueuse de paraffine, l'émulsion de latex est introduite à son tour sous agitation douce. Puis, le mélange d'émulsions formé est soumis pendant au plus 90 minutes, à la même agitation douce, la vitesse de rotation du Turax étant maintenue à 5000 tours minute.

Quinze formules ont été réalisées, dont les pourcentages en poids des composants sont donnés dans le tableau III ci-après. Ces formules Bj (j = 1 à 15) sont issues de certaines formules Ai (i = 1 à 10), issues de l'exemple 1 auxquelles a été ajouté au moins un latex.

**Tableau III**

| N° de la formule Bj | % en poids d'extrait sec de la formule Ai mise en oeuvre | % en poids total d'eau dans l'émulsion | % en poids d'extrait sec de latex | % en poids d'extrait sec total |
|---|---|---|---|---|
| B1 | 30 de A4 | 50,00 | 20 Vinamul 3171 | 50,00 |
| B2 | 30 de A4 | 50,00 | 20 Dowlatex | 50,00 |
| B3 | 20 de A4 | 50,00 | 30 Dowlatex | 50,00 |
| B4 | 10 de A4 | 50,00 | 40 Dowlatex | 50,00 |
| B5 | 30 de A4 | 50,00 | 20 primal AC 261 K | 50,00 |
| B6 | 30 de A4 | 50,00 | 20 orgal PST 50 | 50,00 |
| B7 | 30 de A4 | 50,00 | 20 LS2 | 50,00 |
| B8 | 30 de A4 | 50,00 | 20 MM 360 | 50,00 |
| B9 | 30 de A4 | 50,00 | 20 PD498 | 50,00 |
| B10 | 25 de A4 | 50,00 | 25 MM 360 | 50,00 |
| B11 | 20 de A4 | 50,00 | 30 PD498 | 50,00 |
| B12 | 30 de A5 | 50,00 | 20 PD498 | 50,00 |
| B13 | 30 de A3 | 50,00 | 20 PD498 | 50,00 |
| B14 | 20 de A4 | 50,00 | 30 MM360 | 50,00 |
| B15 | 25 de A4 | 50,00 | 25 PD498 | 50,00 |

Chaque formule Bj est obtenue en prenant un pourcentage d'une formule Ai issue du tableau I complété par l'introduction d'un latex.

Des essais d'utilisation desdites compositions ont été conduits sous la forme d'une couche pulvérisée pour chacune d'entre elles, déposée sur la surface de mortiers et/ou de bétons fraîchement mis en place ou fraîchement démoulés, mis en oeuvre pour assurer la rétention en eau et la capacité d'adhésion renforcée de ladite surface ou bétons au moment de la prise, puis de leur durcissement.

Ces essais ont été réalisés à dosage équivalent, ce dosage étant de 1.50 g/m² de l'émulsion à 50 % d'extrait sec.

Les résultats de cette rétention en eau et de la capacité d'adhésion renforcée ont été réunis dans le tableau IV, sous la forme d'un coefficient de protection à 6 heures et 24 heures après la coulée du béton, qui indique le pourcentage en poids d'eau maintenu sur les surfaces traitées, et une valeur de traction en Mpa pour la mesure de la capacité d'adhésion renforcée aux surfaces traitées par lesdites compositions et aux surfaces non traitées constituant les témoins.

**Tableau IV**

| N° de la formule Bj | Rétention d'eau des surfaces traitées | | Mesure de capacité d'adhésion aux surfaces traitées et non traitées | |
|---|---|---|---|---|
| | Coefficient de protection | | Valeur de traction en Mpa | |
| | à 6 heures | à 24 heures | Surface traitée | Surface non traitée |
| B1 | 99,6 | 95,8 | 0,71 | 1,51 |
| B2 | 99,7 | 95,9 | 0,82 | 1,51 |
| B3 | 98,2 | 94,7 | 1,21 | 1,51 |
| B4 | 96,6 | 92,8 | 1,50 | 1,51 |
| B5 | 99,3 | 95,2 | 0,97 | 1,42 |
| B6 | 99,7 | 95,5 | 1,10 | 1,42 |
| B7 | 99,8 | 95,8 | 0,53 | 1,36 |
| B8 | 99,4 | 94,9 | 0,27 | 1,36 |
| B9 | 99,8 | 96,0 | 0,56 | 1,36 |
| B10 | 98,3 | 94,7 | 0,47 | 1,36 |
| B11 | 95,4 | 92,8 | 1,23 | 1,36 |
| B12 | 95,7 | 93,1 | 0,43 | 1,36 |
| B13 | 99,4 | 96,5 | 0,32 | 1,36 |
| B14 | 98,6 | 95,0 | 0,55 | 1,36 |
| B15 | 98,5 | 94,8 | 0,56 | 1,36 |

Dans le tableau IV précité :
- le pourcentage en poids d'eau, présente dans la composition est le cumul de l'eau présente dans l'émulsion de Mobilcer 115 (à 45% en poids d'extrait sec), le pourcentage en poids de paraffine étant ainsi exprimé en pourcentage en poids d'extrait sec, ainsi que l'huile paraffinique mise en oeuvre,
- les compositions Bj ont reçu 1% d'un agent émulsifiant qui est un agent non ionique, ester de sorbitan, possédant 85 motifs d'oxyde d'éthylène, vendu sous la marque MONTANOX 85 par la société SEPPIC.

Les capacités d'adhésion des compositions Bj (j = 1 à 15) comparées aux capacités d'adhésion de Ai dont les Bj sont issues, c'est-à-dire les capacités d'adhésion de :
- B1 à B11 et B14, B15 sont à comparer à celle de A4 (tableau II) qui est de 0,24,
- B12 sont à comparer à celle de A5 (tableau II) qui est de 0,16,
- B13 sont à comparer à celle de A3 (tableau II) qui est de 0,36.

Ces comparaisons montrent déjà une augmentation significative de cette capacité d'adhésion.

Les comparaisons des capacités d'adhésion des compositions B2, B3 et B4 entre elles, des compositions B9, B11 et B15 entre elles, et des compositions BB, B10 et B14 entre elles, montre également que l'augmentation de la teneur en latex desdites compositions provoque une augmentation de la capacité d'adhésion desdites compositions.

### Exemple 3

Cet exemple concerne des compositions de cure et d'adhésion renforcée comprenant latex et charge minérale pulvérulente.

On a préparé selon l'invention des compositions C_{K} (K = 1, 2 ou 3) formées de :
- paraffine : Mobilcer 115 (marque déposée), commercialisée par la société MOBIL sous la forme d'une émulsion aqueuse à 45% en poids d'extrait sec ;
- huile de type (b), qui est une huile paraffinique, de viscosité faible et égale à 20 mm²/s commercialisée par la société MOBIL sous le nom de marque déposée 60 NEUTRAL ;
- latex : copolymère d'acides acrylique et méthacrylique qui est du Plextol D498 commercialisé par la société Carrechim ;
- charge minérale pulvérulente : carbonate de calcium de surface spécifique de 20 m²/g, de microsilice de surface spécifique de 450 m²/g ou de fumée de silice de 27 m²/g ;
- agent émulsifiant (tensio-actif) : 1% en poids de Montanox 85 commercialisé par la société Seppic ;
- eau QSP à 100% en poids.

Le mode de préparation de cette composition est le même que celui décrit dans l'exemple 1, étant précisé que, après l'achèvement de l'introduction de l'émulsion aqueuse de paraffine :
- l'émulsion de latex est introduite à son tour sous agitation douce :

- puis le mélange est soumis à une agitation importante par l'agitateur Turax tournant à 20 000 tours/minute et sous cette agitation importante, la charge minérale est introduite dans le volume aqueux en formant un mélange, sous cette agitation importante, pendant cinq minutes ;
- quand l'introduction de la charge minérale est achevée, le mélange résultant est soumis à une agitation douce, par l'intermédiaire de l'agitateur Turax dont la vitesse est ramenée de 20 000 tours/minute à 5 000 tours/minute, vitesse douce qui est maintenue pendant 90 minutes.

Au terme de ce temps final d'agitation, la composition selon l'invention est prête à être exploitée par pulvérisation, à raison de 150 g/m² d'une composition contenant environ 50% en poids d'extrait sec.

Deux formules ont été réalisées dont les pourcentages en poids des composants sont donnés dans ce tableau V ci-après.

**Tableau V**

| | Composition C1 en % en poids d'extrait sec | Composition C2 en % en poids d'extrait sec | Composition C3 en % en poids d'extrait sec |
|---|---|---|---|
| % en poids du total de l'eau dans l'émulsion | 48,95 | 48,95 | 48,95 |
| % en poids d'agent émulsifiant | 1 | 1 | 1 |
| % en poids d'extrait sec de latex | 20 | 20 | 20 |
| % en poids de charge minérale | 0,05 de CaCO₃ (1) | 0,05 de silice pyrogénée (microsilice) (2) | 0,05 de fumée de silice (3) |

| | | | |
|---|---|---|---|
| (1) de diamètre moyen 40 µm et de surface spécifique BET : 20 m²/g. (2) de diamètre moyen 50 µm et de surface spécifique BET 450 m²/g (3) de diamètre moyen 40 µm et de surface spécifique BET 27 m²/g | | | |

Des essais d'utilisation desdites compositions ont été conduits sous la forme d'une couche pulvérisée pour chacune d'entre elles, déposée sur la surface de dalles de bétons fraîchement mis en place ou fraîchement démoulés, mis en oeuvre pour assurer à la fois la rétention d'eau au sein desdits bétons au moment de la prise, puis de leur durcissement, et l'adhésion des carreaux de céramiques aux dites surfaces des dalles traitées (constituant les dalles d'essais) et des dalles traitées avec la même composition exempte de charge minérale(constituant des dalles témoins).

Ces essais de protection de surfaces et de renforcement des capacités d'adhésion ont été réalisés à dosage équivalent, ce dosage étant de 150 g/m² de l'émulsion.

Les résultats de la rétention en eau et de la capacité d'adhésion renforcée ont été réunis dans le tableau VI ci-après, sous la forme d'un coefficient de protection à 6 heures et 24 heures après la coulée du béton, qui indique le pourcentage en poids d'eau maintenu sur les surfaces traitées, et d'une valeur de traction en Mpa donnée par un dynamomètre à traction au moment où se produit l'arrachement de chaque carreau céramique.

**Tableau VI**

| N° de la formule | Coefficient de protection pour les surfaces traitées | | Mesure de capacité d'adhésion aux surfaces traitées | |
|---|---|---|---|---|
| | | | Valeur de traction en Mpa | |
| | à 6 heures | à 24 heures | Surface traitée avec composition Ck chargée | Surface traitée avec composition C1 sans charge minérale |
| C1 | 99,4 | 95,0 | 0,67 | 0,53 |
| C2 | 99,8 | 95,8 | 0,98 | 0,53 |
| C3 | 99,0 | 94,7 | 0,62 | 0,53 |

La comparaison des capacités d'adhésion entre les compositions C1, C2 et C3 comprenant des charges minérales pulvérulentes (CaCO₃, microsilice, fumée de silice) et les mêmes compositions démunies desdites charges minérales pulvérulentes (témoins) montre que la charge minérale associée à un latex augmente fortement la capacité d'adhésion.

La charge minérale à base de silice provoque une capacité d'adhésion très supérieure à celle du carbonate de calcium, à % pondéraux égaux, étant de 0,05% que cette capacité d'adhésion est d'autant plus importante que la surface spécifique de la charge minérale est elevée.

### Exemple 4

Cet exemple concerne des compositions de cure et d'adhésion renforcée comprenant divers latex et charges minérales pulvérulentes.

On a préparé selon l'invention des compositions De (e = 1 à 6) formées de :
- paraffine : Mobilcer 115 (marque déposée), commercialisée par la société MOBIL sous la forme d'une émulsion aqueuse à 45% en poids d'extrait sec ;
- huile de type (b) : qui est une huile paraffinique, de viscosité faible et égale à 20 mm²/s commercialisée par la société MOBIL sous le nom de marque déposée 60 NEURAL ;
- latex : copolymère d'acides acrylique et méthacrylique qui est du Plextol D498 commercialisé par la société Carrechim ;
- charge minérale pulvérulente : carbonate de calcium de surface spécifique de 20 m²/g ou silice de surface spécifique de 450 m²/g _{;}
- agent émulsifiant (tensio-actif) : 1% en poids de Montanox 85 commercialisé par la société Seppic ;
- eau QSP à 100% en poids.

Le mode de préparation de cette composition est le même que celui décrit dans l'exemple 3.

Des formules D1 (1 = 1 à 4) ont été réalisées dont les pourcentages en poids des composants sont donnés dans le tableau VII ci-après.

**Tableau VII**

| Dl | Formule dont est issu D1 | % en poids total d'eau | % en poids d'extrait sec de latex | % en poids de charge minérale | % en poids d'extrait sec total de la composition |
|---|---|---|---|---|---|
| D1 | B13 | 50,00 | 20(PD49B) | 0,07 CaCO₃ (1) | 50,00 |
| D2 | B7 | 50,00 | 20 (LS2) | 0,05 CaCO₃ (1) | 50,00 |
| D3 | B11 | 50,00 | 30(PD498) | 1,36 Silice (2) | 50,00 |
| D4 | B15 | 50,00 | 25(PD498) | 1.21 silice (2) | 50,00 |

| | | | | | |
|---|---|---|---|---|---|
| * formule D1 issue de la formule Bj (1) CaCO₃, de surface spécifique 20 m²/g. (2) Sipermat 50 de surface spécifique 450 m²/g | | | | | |

Des essais d'utilisation desdites compositions ont été conduits sous la forme d'une couche pulvérisée pour chacune d'entre elles, déposée sur la surface de dalles de bétons fraîchement mis en place ou fraîchement démoulés, mis en oeuvre pour assurer à la fois la rétention d'eau au sein desdits bétons au moment de la prise, puis de leur durcissement, et l'adhésion des carreaux de céramiques aux dites surfaces des dalles traitées (constituant les dalles d'essais) et des dalles traitées avec la même composition exempte de charge minérale(constituant des dalles témoins).

Ces essais de protection de surfaces et de renforcement des capacités d'adhésion ont été réalisés à dosage équivalent, ce dosage étant de 150 g/m² de l'émulsion.

Les résultats de la rétention en eau et de la capacité d'adhésion renforcée ont été réunis dans le tableau VIII ci-après, sous la forme d'un coefficient de protection à 6 heures et 24 heures après la coulée du béton, qui indique le pourcentage en poids d'eau maintenu sur les surfaces traitées, et d'une valeur de traction en Mpa donnée par un dynamomètre à traction au moment où se produit l'arrachement de chaque carreau céramique.

**Tableau VIII**

| N° de la formule Dl | Coefficient de protection pour les surfaces traitées | | Mesure de capacité d'adhésion aux surfaces traitées et non traitées | | |
|---|---|---|---|---|---|
| | | | Valeur de traction en Mpa | | |
| | à 6 heures | à 24 heures | Surface traitée avec composi tion Dl chargée | Surface traitée avec composition Dl sans charge minérale | Surface non traitée |
| D1 | | | 0,75 | 0,32 | 1,36 |
| D2 | | | 0,67 | 0,53 | 1,36 |
| D3 | | | 1,33 | 1.23 | 1,36 |
| D4 | | | 0,67 | 0,56 | 1,36 |

De ce tableau sont extraites les observations suivante :
- l'augmentation simultanée de latex et de charge minérale pulvérulente provoque une excellente capacité d'adhésion des compositions selon l'invention, cette capacité d'adhésion pouvant atteindre celle de surfaces de bétons non traitées par lesdites compositions, et dépassant la capacité d'adhésion des compositions de même origine mais démunies de la charge minérale pulvérulente ;

## Revendications

1. Compositions destinées à être appliquées sur des surfaces de mortiers et/ou de bétons fraîchement mis en place ou fraîchement démoulés, avant le début de prise, dans le but de les rendre à la fois synergique, pour empêcher l'évaporation de l'eau nécessaire à leur prise et à leur durcissement et créer sur lesdites surfaces une capacité d'adhésion forte des matériaux de finition, compositions se présentant sous la forme d'émulsion aqueuse, comprenant au moins une paraffine associée à au moins un autre composé hydrocarboné, **caractérisées en ce que** elles se composent :
a) d'au moins une paraffine d'origine pétrolière ou de synthèse renfermant, en mélange, des hydrocarbures saturés et insaturés aliphatiques de formules générales CₙH₂ₙ₊₂ et CₙH₂ₙ pour lesquels n est au moins égal à 30 et dont le point de fusion est compris entre 40°C et 75°C ;
b) d'au moins un composé hydrocarboné qui est une huile hydrocarbonée linéaire et/ou cyclique, d'origine aliphatique et/ou naphténique, formées de chaînes hydrocarbonées, seules ou en mélange, de formules générales CₙH₂ₙ₊₂ et CₙH₂ₙ pour lesquelles n est inférieur à 30 ; et/ou
c) d'au moins un composé hydrocarboné qui est une huile formée d'au moins un ester résultant de la réaction de condensation d'un acide gras saturé et/ou insaturé avec un alcool ayant de une à cinq fonctions hydriques ;
d) d'au moins un latex formé d'une émulsion aqueuse colloïdale d'au moins un polymère et/ou copolymère choisi dans le groupe constitué par les homopolymères d'acide acrylique, d'acide méthacrylique, et des esters de ces acides dont le groupement ester est en C₁ à C₁₂, les copolymères d'acide acrylique, d'acide méthacrylique et/ou des esters de ces acides dont le groupement ester est en C₁ à C₁₂. les copolymères de vinyle et d'acide acrylique ou d'acide méthacrylique, les copolymères de vinyle et d'esters en C₁ à C₁₂, les copolymères d'acide acrylique ou méthacrylique, les copolymères d'acide acrylique ou d'acide méthacrylique et d'esters acryliques ou méthacryliques, des copolymères de styrène-acrylique ou méthacrylique, les copolymères d'éthylène et d'acétate de vinyle, les copolymères d'éthylène et d'acide acrylique ou méthacrylique, les copolymères acryliques/uréthane, les copolymères styrène/butadiène ;
e) d'au moins une charge pulvérulente d'origine minérale ou organique.

2. Compositions selon la revendication 1, **caractérisées en ce que** la paraffine est choisie dans le groupe constitué par des alcanes et/ou alcènes, pris seuls ou en mélange, qui sont des hydrocarbures saturées et/ou insaturés d'origine pétrolière ou de synthèse, de formules générales CₙH₂ₙ₊₂ et CₙH₂ₙ dans lesquelles n prend une valeur préférentiellement comprise entre 30 ≤ n ≤ 120.

3. Compositions selon les revendications 1 à 2,
**caractérisées en ce que** la paraffine a un point de fusion préférentiellement compris entre 50°C et 70°C.

4. Compositions selon l'une quelconque des revendications 1 à 3, **caractérisées en ce que** la paraffine a une densité comprise entre 0,85 et 0,95, et préférentiellement comprise enter 0,88 et 0,92.

5. Compositions selon l'une quelconque des revendications 1 à 4, **caractérisées en ce que** l'autre composé hydrocarboné (b) et/ou composé hydrocarboné (c), accompagnant le composé (a) qui est la paraffine, est choisi dans le groupe constitué par les cires et/ou les huiles hydrocarbonées naturelles ou synthétiques.

6. Compositions selon l'une quelconque des revendications 1 à 5, **caractérisées en ce que** le composé hydrocarboné de type (b) est une huile hydrocarbonée de formules générales CₙH₂ₙ₊₂ et/ou CₙH₂ₙ dans lesquelles n prend préférentiellement une valeur comprise entre 10 et 25.

7. Compositions selon l'une quelconque des revendications 1 à 6, **caractérisées en ce que** le composé hydrocarboné de type (b) est choisi parmi les huiles hydrocarbonées ayant une viscosité cinématique comprise entre 5 et 500 mm²/s.

8. Compositions selon l'une quelconque des revendications 1 à 7, **caractérisées en ce que** le composé hydrocarboné de type (b) est choisi parmi les huiles hydrocarbonées ayant une densité comprise entre 0,83 et 0,97.

9. Compositions selon l'une quelconque des revendications 1 à 8, **caractérisées en ce que** le composé hydrocarboné de type (c) est une huile formée d'au moins un ester résultant de la réaction de condensation d'un acide gras saturé et/ou insaturé choisi dans le groupe des acides gras en C₈ à C₂₄, avec un alcool mono, di ou trihydrique.

10. Compositions selon la revendication 9, **caractérisées en ce que** les acides gras sont choisis dans le groupe constitué par l'acide caprylique, caprique, laurique, myristique, palmitique, stéarique, arachidique, béhénique, lignocérique, palmitoléique, oléique, gadaléique, érucique, linoléique, linolénique, isolinolénique.

11. Compositions selon l'une quelconque des revendications 9 ou 10, **caractérisées en ce que** les alcools ayant de une à cinq fonctions hydriques, entrant dans la préparation du composé hydrocarboné de type (c) qui est une huile formée d'au moins un ester, sont choisis dans le groupe constitué par les alcanols et les alcénols en C₂ à C₂₀.

12. Compositions selon la revendication 11, **caractérisées en ce que** l'alcool monohydrique est choisi dans le groupe constitué par l'éthanol, le propanol, le butanol, le pentanol, l'alcool stéarique, l'alcool oléique, l'alcool dihydrique est choisi dans le groupe constitué par les propane diol, butane diol, pentane diol, hexane diol, heptane diol, octane diol, nonane diol, décane diol, undécane diol et dodécane diol et autres dihydroxyalcanes ou alcènes, 1 l'alcool trihydrique est choisi dans le groupe constitué par le glycérol, les butane triol, pentane triol, hexane triol, heptane triol, octane triol, nonane triol, décane triol, undécane triol, dodécane triol et autres trihydroxyalcanes ou alcènes, le propane-1tri-2di-ol.

13. Compositions selon l'une quelconque des revendications 1 à 12, **caractérisées en ce que** la charge pulvérulente minérale (e) est choisie dans le groupe constitué par le carbonate de calcium, le kaolin, l'alumine, la silice pyrogénée ou non, la fumée de silice, le sulfate de baryum, utilisés seuls ou en mélange.

14. Compositions selon la revendication 13, **caractérisées en ce que** la charge minérale pulvérulente a une granulométrie médiane comprise entre 1 et 100 µm et une répartition comprise entre 0 µm et 300 µm.

15. Compositions selon l'une quelconque des revendications 13 à 14, **caractérisées en ce que** la charge minérale pulvérulente a une surface spécifique BET d'au moins 1 m²/g et préférentiellement comprise entre 20 m²/g et 700 m²/g.

16. Compositions selon l'une quelconque des revendications 1 à 12, **caractérisées en ce que** la charge pulvérulente organique (e) est choisie dans le groupe des poudres de polymère, copolymères, élastomères, thermoplastiques ou thermodurs.

17. Compositions selon l'une quelconque des revendications 1 à 15, **caractérisées en ce que** :
- le composant (a), formé d'au moins une paraffine, est présent dans lesdites compositions à raison de 2% à 90% en poids, préférentiellement de 5% à 60% en poids et très préférentiellement de 5% à 40% en poids ;
- le composant (b), formé d'au moins un composé hydrocarboné, est présent dans lesdites compositions à raison de 5% à 90% en poids, préférentiellement de 8% à 40% en poids et très préférentiellement de 9% à 30% en poids ;
- le composant (c), qui est un composé hydrocarboné différent de (b), est présent dans lesdites compositions à raison de 5% à 90% en poids, préférentiellement de 10% à 50% en poids et très préférentiellement de 15% à 40% en poids ;
- le composant (d) qui est au moins un latex est formé d'au moins un polymère et/ou copolymère en émulsion dans l'eau, est présent dans lesdites compositions à raison de 10% à 45% en poids d'extrait sec et préférentiellement de 15% à 35% en poids d'extrait sec ;
- le composant (e) qui est formé d'au moins une charge pulvérulente d'origine minérale ou organique est présent dans lesdites compositions à raison de 0,01% en poids à 10% en poids et préférentiellement de 0,02% en poids à 5% en poids ;
- et l'eau : QSP à 100% en poids.

18. Compositions selon l'une quelconque des revendications 1 à 15, **caractérisées en ce que** elles se composent :
- de 2% à 90% en poids d'un composant (a) à l'état d'extrait sec, formé d'au moins une paraffine d'origine pétrolière ou de synthèse renfermant, en mélange, des hydrocarbures saturés et insaturés aliphatiques de formules générales CₙH₂ₙ₊₂ et CₙH₂ₙ pour lesquels n est au moins égal à 30 et dont le point de fusion est compris entre 40°C et 75°C ;
- de 5% à 90% en poids d'un composant (b) formé d'au moins une huile hydrocarbonée linéaire et/ou cyclique, d'origine aliphatique et/ou naphténique, qui sont des chaînes hydrocarbonées, seules ou en mélange, de formules générales CₙH₂ₙ₊₂ et CₙH₂ₙ pour lesquelles n est inférieur à 30 ; et/ou
- de 5% à 90% en poids d'un composant (c) comportant au moins une huile formée d'au moins un ester résultant de la réaction de condensation d'un acide gras saturé et/ou insaturé avec un alcool mono, di ou trihydrique ;
- de 10% à 45% en poids d'un composant (d) comportant au moins un latex formé d'une émulsion aqueuse colloïdale d'au moins un polymére ;
- de 0,01% en poids à 10% en poids d'un composant (e) formé d'au moins une charge minérale pulvérulente de surface spécifique BET au moins égale à 1 m²/g ;
- et d'eau : QSP à 100% en poids.

19. Compositions selon la revendication in,
**caractérisées en ce que** elles se composent :
- préférentiellement de 5% à 60% en poids et très préférentiellement de 5% à 40% en poids du composant (a) ;
- préférentiellement de 8% à 40% en poids et très préférentiellement de 9% à 30% en poids du composant (b) ; et/ou
- préférentiellement de 10% à 50% en poids et très préférentiellement de 15% à 40% en poids du composant(C);
- et préférentiellement de 15% à 35% en poids d'extrait sec du composant (d) ;
- et préférentiellement de 0,02% à 5% en poids du composant (e) ;
- et d'eau : QSP à 100%.

20. Compositions selon l'une quelconque des revendications 18 ou 19, **caractérisées en ce que** le rapport pondéral en matière active sèche du cumul des huiles et de la paraffine présentes est au moins égal à 0,25, est préférentiellement au moins égal à 0,63 et est très préférentiellement compris entre 0,64 et 9.

21. Compositions selon l'une quelconque des revendications 1 à 20, **caractérisées en ce que** lesdites compositions, sous forme d'émulsion, ont une teneur en matière sèche comprise entre 10% en poids et 60% en poids et, de préférence, comprise entre 30% en poids et 50% en poids.

22. Procédé de préparation des compositions telles que définies dans l'une quelconque des revendications 1 à 21, **caractérisé en ce qu'**il comporte les étapes successives d'introduction des divers composants dans une zone de préparation soumise à agitation, dont le contenu peut être chauffé et/ou refroidi, ces étapes étant :
i) l'introduction, selon la quantité calculée, de l'eau, nécessaire à la création de l'émulsion, puis éventuellement celle d'un agent émulsifiant dans ladite zone, le premier mélange étant soumis à forte agitation pendant le temps nécessaire à l'obtention d'un milieu homogène ;
ii) l'introduction, selon les quantités calculées, du mélange des composés hydrocarbonés des composants (b) et/ou (c), formant un deuxième mélange, qui est soumis à la même forte agitation pendant le temps nécessaire à l'obtention d'une émulsion ;
iii) l'introduction, selon la quantité calculée et sous agitation douce, de la paraffine dans le deuxième mélange :
- préalablement chauffée à une température suffisante pour provoquer la fusion et le passage à l'état d'émulsion de la paraffine quand la paraffine est introduite sous la forme d'une poudre très fine ; ou
- à une température ambiante quand la paraffine est introduite sous la forme d'une émulsion aqueuse ;
et maintien de l'agitation douce pendant le temps prolongé nécessaire à la formation de l'émulsion, avec un éventuel refroidissement de l'émulsion ;
iv) l'introduction, selon la quantité calculée et sous agitation douce, dans le mélange résultant de iii), du composant (d) qui est le latex, soumis à une agitation douce pendant le temps nécessaire à l'obtention de l'émulsion aqueuse formée des composants (a), (b), (c) et (d) ;
v) l'introduction, selon la quantité calculée et sous forte agitation, dans l'émulsion résultant de iv) du composant (e) qui est la charge minérale ;
vi) puis, soumission de l'émulsion résultant du deuxième mélange transformé en émulsion aqueuse issue de v) à une agitation douce pendant un temps prolongé pour homogénéiser l'émulsion aqueuse formée contenant tous les composants.

23. Application des compositions telles que définies dans l'une quelconque des revendications 1 à 21, à la protection contre l'évaporation d'eau et l'augmentation de l'adhésion de surfaces de mortiers et/ou de bétons fraîchement mis en place ou fraîchement démoulés par pulvérisation desdites compositions en émulsions aqueuses sur lesdites surfaces à raison d'une charge utile déposée par unité de surface comprise entre 50 g/m² et 150 g/m² pour atteindre la protection totale.

## Claims

1. Compositions intended to be applied to the surfaces of freshly placed or freshly demolded mortars and/or concretes, before the beginning of setting, for the purpose of rendering them both synergistic, in order to prevent the evaporation of the water necessary for their setting and for their hardening and to create, on said surfaces, high adhesiveness of the finishing materials, which compositions are provided in the form of an aqueous emulsion comprising at least one paraffin wax in combination with at least one other hydrocarbon compound, **characterized in that** they are composed:
a) of at least one paraffin wax of petroleum or synthetic origin including, in a mixture, saturated and unsaturated aliphatic hydrocarbons of general formulae CₙH₂ₙ₊₂ and CₙH₂ₙ for which n is at least equal to 30 and for which the melting point is between 40°C and 75°C;
b) of at least one hydrocarbon compound which is a linear and/or cyclic hydrocarbon oil of aliphatic and/or naphthenic origin formed of hydrocarbon chains, alone or in a mixture, of general formulae CₙH₂ₙ₊₂ and CₙH₂ₙ for which n is less than 30; and/or
c) of at least one hydrocarbon compound which is an oil formed of at least one ester resulting from the condensation reaction of a saturated and/or unsaturated fatty acid with an alcohol having from one to five hydric functional groups;
d) of at least one latex which is formed of a colloidal aqueous emulsion of at least one polymer and/or copolymer selected from the group consisting of homopolymers of acrylic acid, of methacrylic acid and of the esters of these acids, the ester group of which is a C1 to C12 alkyl group, copolymers of acrylic acid, of methacrylic acid and/or of the esters of these acids, the ester group of which is a C1 to C12 alkyl group, copolymers of vinyl and of acrylic acid or of methacrylic acid, copolymers of vinyl and of C1 to C12 esters, copolymers of acrylic or methacrylic acid, copolymers of acrylic acid or of methacrylic acid and of acrylic or methacrylic esters, styrene/acrylic or methacrylic copolymers, copolymers of ethylene and of vinyl acetate, copolymers of ethylene and of acrylic or methacrylic acid, acrylic/urethane copolymers and styrene/butadiene copolymers;
e) of at least one pulverulent filler of inorganic or organic origin.

2. Compositions according to claim 1, **characterized in that** the paraffin wax is selected from the group consisting of alkanes and/or alkenes, taken alone or as a mixture, which are saturated and/or unsaturated hydrocarbons of petroleum or synthetic origin of general formulae CₙH₂ₙ₊₂ and CₙH₂ₙ in which n takes a value preferably of between 30 ≤ n ≤ 120.

3. Compositions according to claim 1 or 2, **characterized in that** the paraffin wax has a melting point preferably of between 50°C and 70°C.

4. Compositions according to any one of claims 1 to 3, **characterized in that** the paraffin wax has a density of between 0.85 and 0.95 and preferably of between 0.88 and 0.92.

5. Compositions according to any one of claims 1 to 4, **characterized in that** the other hydrocarbon compound (b) and/or hydrocarbon compound (c) accompanying the compound (a) which is the paraffin wax is selected from the group consisting of natural or synthetic hydrocarbon waxes and/or oils.

6. Compositions according to any one of claims 1 to 5, **characterized in that** the hydrocarbon compound of type (b) is a hydrocarbon oil of general formulae CₙH₂ₙ₊₂ and/or CₙH₂ₙ in which n preferably takes a value of between 10 and 25.

7. Compositions according to any one of claims 1 to 6, **characterized in that** the hydrocarbon compound of type (b) is selected from hydrocarbon oils having a kinematic viscosity of between 5 and 500 mm²/s.

8. Compositions according to any one of claims 1 to 7, **characterized in that** the hydrocarbon compound of type (b) is selected from hydrocarbon oils having a density of between 0.83 and 0.97.

9. Compositions according to any one of claims 1 to 8, **characterized in that** the hydrocarbon compound of type (c) is an oil formed of at least one ester resulting from the condensation reaction of a saturated and/or unsaturated fatty acid selected from the group of the C₈ to C₂₄ fatty acids with a mono-, di- or trihydric alcohol.

10. Compositions according to claim 9, **characterized in that** the fatty acids are selected from the group consisting of caprylic, capric, lauric, myristic, palmitic, stearic, arachidic, behenic, lignoceric, palmitoleic, oleic, gadoleic, erucic, linoleic, linolenic and isolinolenic acids.

11. Compositions according to claim 9 or 10, **characterized in that** the alcohols having from one to five hydric functional groups participating in the preparation of the hydrocarbon compound of type (c) which is an oil formed of at least one ester are selected from the group consisting of C₂ to C₂₀ alkanols and alkenols.

12. Compositions according to claim 11, **characterized in that** the monohydric alcohol is selected from the group consisting of ethanol, propanol, butanol, pentanol, stearyl alcohol and oleyl alcohol, the dihydric alcohol is selected from the group consisting of propanediol, butanediol, pentanediol, hexanediol, heptanediol, octanediol, nonanediol, decanediol, undecanediol and dodecanediol, and other dihydroxyalkanes or -alkenes, the trihydric alcohol is selected from the group consisting of glycerol, butanetriol, pentanetriol, hexanetriol, heptanetriol, octanetriol, nonanetriol, decanetriol, undecanetriol, dodecanetriol and other trihydroxyalkanes or -alkenes, propane-1tri-2di-ol.

13. Compositions according to any one of claims 1 to 12, **characterized in that** the pulverulent inorganic filler (e) is selected from the group consisting of calcium carbonate, kaolin, alumina, pyrogenic or nonpyrogenic silica, silica fume and barium sulfate, used alone or in a mixture.

14. Compositions according to claim 13, **characterized in that** the pulverulent inorganic filler has a median particle size of between 1 and 100 µm and a distribution of between 0 µm and 300 µm.

15. Compositions according to either one of claims 13 and 14, **characterized in that** the pulverulent inorganic filler has a BET specific surface of at least 1 m²/g and preferably of between 20 m²/g and 700 m²/g.

16. Compositions according to any one of claims 1 to 12, **characterized in that** the pulverulent organic filler (e) is selected from the group of the powders formed of polymers, copolymers, elastomers, thermoplastics or thermosets.

17. Compositions according to any one of claims 1 to 15, **characterized in that**:
- the component (a), formed of at least one paraffin wax, is present in said compositions in a proportion of 2% to 90% by weight, preferably of 5% to 60% by weight and very preferably of 5% to 40% by weight;
- the component (b), formed of at least one hydrocarbon compound, is present in said compositions in a proportion of 5% to 90% by weight, preferably of 8% to 40% by weight and very preferably of 9% to 30% by weight;
- the component (c), which is a hydrocarbon compound different from (b), is present in said compositions in a proportion of 5% to 90% by weight, preferably of 10% to 50% by weight and very preferably of 15% to 40% by weight;
- the component (d), which is at least one latex formed of at least one polymer and/or copolymer in emulsion in water, is present in said compositions in a proportion of 10% to 45% by weight of solids content and preferably of 15% to 35% by weight of solids content;
- the component (e), which is formed of at least one pulverulent filler of inorganic or organic origin, is present in said compositions in a proportion of 0.01 % by weight to 10% by weight and preferably of 0.02% by weight to 5% by weight;
- and water: q.s. for 100% by weight.

18. Compositions according to any one of claims 1 to 15, **characterized in that** it is composed:
- of 2% to 90% by weight of a component (a) in the solids content state formed of at least one paraffin wax of petroleum or synthetic origin including, in a mixture, saturated and unsaturated aliphatic hydrocarbons of general formulae CₙH₂ₙ₊₂ and CₙH₂ₙ for which n is at least equal to 30 and for which the melting point is between 40°C and 75°C;
- of 5% to 90% by weight of a component (b) formed of at least one linear and/or cyclic hydrocarbon oil of aliphatic and/or naphthenic origin which are hydrocarbon chains, alone or as a mixture, of general formulae CₙH₂ₙ₊₂ and CₙH₂ₙ for which n is less than 30; and/or
- of 5% to 90% by weight of a component (c) comprising at least one oil formed of at least one ester resulting from the condensation reaction of a saturated and/or unsaturated fatty acid with a mono-, di- or trihydric alcohol;
- of 10% to 45% by weight of component (d) comprising at least one latex formed of a colloidal aqueous emulsion of at least one polymer;
- of 0.01% by weight to 10% by weight of a component (e) formed of at least one pulverulent inorganic filler with a BET specific surface at least equal to 1 m²/g;
- and of water: q.s. for 100% by weight.

19. Compositions according to claim 18, **characterized in that** it is composed:
- preferably of 5% to 60% by weight and very preferably of 5% to 40% by weight of the component (a);
- preferably of 8% to 40% by weight and very preferably of 9% to 30% by weight of the component (b); and/or
- preferably of 10% to 50% by weight and very preferably of 15% to 40% by weight of the component (c);
- and preferably of 15% to 35% by weight of solids content of the component (d);
- and preferably of 0.02% to 5% by weight of the component (e);
- and of water: q.s. for 100%.

20. Compositions according to either one of claims 18 and 19, **characterized in that** the weight ratio, as dry active material, of the total of the oils and of the paraffin wax present is at least equal to 0.25, is preferably at least equal to 0.63 and is very preferably between 0.64 and 9.

21. Compositions according to any one of claims 1 to 20, **characterized in that** said compositions, in the emulsion form, have a dry matter content of between 10% by weight and 60% by weight and preferably of between 30% by weight and 50% by weight.

22. A process for the preparation of the composition as defined in any one of claims 1 to 21, **characterized in that** it comprises the successive steps of introduction of the various components into a preparation region subjected to stirring, the contents of which can be heated and/or cooled, these steps being:
i) the introduction into said region, according to the calculated amount, of the water necessary to create the emulsion and then optionally the introduction of an emulsifying agent, the first mixture being subjected to vigorous stirring during the time needed to produce a homogeneous medium;
ii) the introduction, according to the calculated amounts, of the mixture of the hydrocarbon compounds of the components (b) and/or (c), forming a second mixture, which is subjected to the same vigorous stirring during the time needed to produce an emulsion;
iii) the introduction, according to the calculated amount and with gentle stirring, of the paraffin wax into the second mixture:
- heated beforehand to a temperature sufficient to cause the paraffin wax to melt and to convert the paraffin wax into the emulsion state, when the paraffin wax is introduced in the form of a very fine powder; or
- at ambient temperature, when the paraffin wax is introduced in the form of an aqueous emulsion;
- and maintenance of gentle stirring during the prolonged time needed to form the emulsion, with optional cooling of the emulsion;
iv) the introduction into the mixture resulting from iii), according to the calculated amount and with gentle stirring, of the component (d), which is the latex, subjected to gentle stirring during the time needed to produce the aqueous emulsion formed of the components (a), (b), (c) and (d);
v) the introduction into the emulsion resulting from iv), according to the calculated amount and with vigorous stirring, of the component (e), which is the inorganic filler;
vi) and then subjection of the emulsion resulting from the second mixture converted to an aqueous emulsion resulting from v) to gentle stirring for a prolonged time in order to homogenize the aqueous emulsion formed comprising all the components.

23. Application of the composition as defined in any one of claims 1 to 21 in protecting against evaporation of water and increasing the adhesion of the surfaces of freshly placed or freshly demolded mortars and/or concretes by spraying said compositions, as aqueous emulsions, over said surfaces in a proportion of a working load deposited per unit of surface area of between 50 g/m² and 150 g/m² in order to achieve complete protection.

## Patentansprüche

1. Zusammensetzungen zum Auftragen auf Oberflächen von frisch eingebrachten oder frisch entformten Mörteln und/oder Betonen vor dem beginnendem Erstarren, mit dem Ziel, sie synergetisch zu machen, und auch um die Verdunstung des für ihr Erstarren und Erhärten notwendigen Wassers zu verhindern und auf den Oberflächen ein starkes Haftvermögen des Endmaterials zu erzeugen, wobei die Zusammensetzungen in Form einer wässrigen Emulsion vorliegen, enthaltend mindestens ein Paraffin in Verbindung mit mindestens einer anderen Kohlenwasserstoffverbindung, **dadurch gekennzeichnet, dass** sie umfassen:
a) mindestens ein Erdöl- oder Syntheseparaffin, das in Mischung aliphatische gesättigte und ungesättigte Kohlenwasserstoffe der allgemeinen Formeln CₙH₂ₙ₊₂ und CₙH₂ₙ enthält, wobei n mindestens gleich 30 ist, und dessen Schmelzpunkt zwischen 40°C und 75°C liegt;
b) mindestens eine Kohlenwasserstoffverbindung, bei der es sich um ein lineares und/oder cyclisches Kohlenwasserstofföl aliphatischer und/oder naphtenischer Herkunft handelt, bestehend aus Kohlenwasserstoffketten, allein oder in Mischung, der allgemeinen Formeln CₙH₂ₙ₊₂ und CₙH₂ₙ, wobei n kleiner als 30 ist; und/oder
c) mindestens eine Kohlenwasserstoffverbindung, bei der es sich um ein Öl handelt, bestehend aus mindestens einem Ester, der aus der Kondensationsreaktion einer gesättigten und/oder ungesättigten Fettsäure mit einem Alkohol resultiert, welcher eine bis fünf Hydrierfunktionen hat ;
d) mindestens einen Latex, bestehend aus einer kolloidalen wässrigen Emulsion aus mindestens einem Polymer und/oder Copolymer ausgewählt aus der Gruppe bestehend aus den Homopolymeren von Acrylsäure, Methacrylsäure und Estern dieser Säuren, deren Estergruppe aus C₁ bis C₁₂ besteht, den Copolymeren von Acrylsäure, Methacrylsäure und/oder Estern dieser Säuren, deren Estergruppe aus C₁ bis C₁₂ besteht, den Copolymeren von Vinyl und Acrylsäure oder Methacrylsäure, den Copolymeren von Vinyl und Estern aus C₁ bis C₁₂, den Copolymeren von Acryl- oder Methacrylsäure, den Copolymeren von Acrylsäure oder Methacrylsäure und Acryl- oder Methacrylestern, den Copolymeren von Acryl- oder Methacrylstyrol, den Copolymeren von Ethylen und Vinylacetat, den Copolymeren von Ethylen und Acryl- oder Methacrylsäure, den Acryl-Urethan-Copolymeren, den StyrolButadien-Copolymeren;
e) mindestens einen pulvrigen Füllstoff mineralischer oder organischer Herkunft.

2. Zusammensetzungen nach Anspruch 1, **dadurch gekennzeichnet, dass** das Paraffin ausgewählt ist aus der Gruppe bestehend aus Alkanen und/oder Alkenen, allein genommen oder in Mischung, bei denen es sich um gesättigte und/oder ungesättigte Erdöl- oder Synthesekohlenwasserstoffe der allgemeinen Formeln CₙH₂ₙ₊₂ und CₙH₂ₙ handelt, in denen n vorzugsweise einen Wert zwischen 30 ≤ n ≤ 120 annimmt.

3. Zusammensetzungen nach den Ansprüchen 1 bis 2, **dadurch gekennzeichnet, dass** das Paraffin einen Schmelzpunkt vorzugsweise zwischen 50°C und 70°C hat.

4. Zusammensetzungen nach irgendeinem der Ansprüche 1 bis 3, **dadurch gekennzeichnet, dass** das Paraffin eine Dichte zwischen 0,85 und 0,95 und vorzugsweise zwischen 0,88 und 0,92 hat.

5. Zusammensetzungen nach irgendeinem der Ansprüche 1 bis 4, **dadurch gekennzeichnet, dass** die andere Kohlenwasserstoffverbindung (b) und/oder Kohlenwasserstoffverbindung (c), die die Verbindung (a) - das Paraffin - begleitet, ausgewählt ist aus der Gruppe bestehend aus den natürlichen oder synthetischen Kohlenwasserstoffwachsen und/oder -ölen.

6. Zusammensetzungen nach irgendeinem der Ansprüche 1 bis 5, **dadurch gekennzeichnet, dass** die Kohlenwasserstoffverbindung vom Typ (b) ein Kohlenwasserstofföl der allgemeinen Formeln CₙH₂ₙ₊₂ und/oder CₙH₂ₙ ist, in denen n vorzugsweise einen Wert zwischen 10 und 25 annimmt.

7. Zusammensetzungen nach irgendeinem der Ansprüche 1 bis 6, **dadurch gekennzeichnet, dass** die Kohlenwasserstoffverbindung vom Typ (b) ausgewählt ist unter den Kohlenwasserstoffölen, die eine kinematische Viskosität zwischen 5 und 500 m²/s haben.

8. Zusammensetzungen nach irgendeinem der Ansprüche 1 bis 7, **dadurch gekennzeichnet, dass** die Kohlenwasserstoffverbindung vom Typ (b) ausgewählt ist unter den Kohlenwasserstoffölen, die eine Dichte zwischen 0,83 und 0,97 haben.

9. Zusammensetzungen nach irgendeinem der Ansprüche 1 bis 8, **dadurch gekennzeichnet, dass** die Kohlenwasserstoffverbindung vom Typ (c) ein Öl ist, bestehend aus mindestens einem Ester, der aus der Kondensationsreaktion einer gesättigten und/oder ungesättigten Fettsäure, ausgewählt aus der Gruppe der C₈ bis C₂₄-Fettsäuren, mit einem ein-, zwei- oder dreiwertigen Alkohol resultiert.

10. Zusammensetzungen nach Anspruch 9, **dadurch gekennzeichnet, dass** die Fettsäuren ausgewählt sind aus der Gruppe bestehend aus Capryl-, Caprin-, Laurin-, Myristin-, Palmitin-, Stearin-, Arachidin-, Behen-, Lignocerin-, Palmitolein-, Öl-, Gadolein-, Erucin-, Linol-, Linolen-, Isolinolensäure.

11. Zusammensetzungen nach irgendeinem der Ansprüche 9 oder 10, **dadurch gekennzeichnet, dass** die Alkohole mit einer bis fünf Hydrierfunktionen, die Bestandteil der Kohlenwasserstoffverbindung vom Typ (c) sind, welche ein Öl bestehend aus mindestens einem Ester ist, ausgewählt sind aus der Gruppe bestehend aus den C₂ bis C₂₀-Alkanolen und -Alkenolen.

12. Zusammensetzungen nach Anspruch 11, **dadurch gekennzeichnet, dass** der einwertige Alkohol ausgewählt ist aus der Gruppe bestehend aus Ethanol, Propanol, Butanol, Pentanol, Stearinalkohol, Ölalkohol, der zweiwertige Alkohol ausgewählt ist aus der Gruppe bestehend aus den Propan-, Butan-, Pentan-, Hexan-, Heptan-, Octan-, Nonan-, Decan-, Undecan- und Dodecandiolen und anderen Dihydroxyalkanen oder -alkenen, der dreiwertige Alkohol ausgewählt ist aus der Gruppe bestehend aus Glycerin, den Butan-, Pentan-, Hexan-, Heptan-, Octan-, Nonan-, Decan-, Undecan-, Dodecandiolen und anderen Trihydroxyalkanen oder-alkenen, 1tri-2di-ol-Propan.

13. Zusammensetzungen nach irgendeinem der Ansprüche 1 bis 12, **dadurch gekennzeichnet, dass** der mineralische pulverige Füllstoff (e) ausgewählt ist aus der Gruppe bestehend aus Calciumcarbonat, Kaolin, Aluminiumoxid, pyrogenem oder nicht pyrogenem Siliciumdioxid, Siiliciumdioxid-Rauch, Bariumsulfat, die allein oder in Mischung eingesetzt werden.

14. Zusammensetzungen nach Anspruch 13, **dadurch gekennzeichnet, dass** der mineralische pulverige Füllstoff eine Median-Korngröße zwischen 1 und 100 µm und eine Korngrößenverteilung zwischen 0 µm und 300 µm hat.

15. Zusammensetzungen nach irgendeinem der Ansprüche 13 bis 14, **dadurch gekennzeichnet, dass** der mineralische pulverige Füllstoff eine spezifische BET-Oberfläche von mindestens 1 m²/g und vorzugsweise zwischen 20 m²/g und 700 m²/g hat.

16. Zusammensetzungen nach irgendeinem der Ansprüche 1 bis 12, **dadurch gekennzeichnet, dass** der organische pulverige Füllstoff (e) ausgewählt ist aus der Gruppe der Polymer-, Copolymer-, Elastomer-, Thermoplast- oder Duroplastpulver.

17. Zusammensetzungen nach irgendeinem der Ansprüche 1 bis 15, **dadurch gekennzeichnet, dass** :
- die Komponente (a), die aus mindestens einem Paraffin besteht, in einer Menge von 2 bis 90 Gew.-%, bevorzugt 5 bis 60 Gew.-% und besonders bevorzugt 5 bis 40 Gew.-% in den Zusammensetzungen vorhanden ist;
- die Komponente (b), die aus mindestens einer Kohlenwasserstoffverbindung besteht, in einer Menge von 5 bis 90 Gew.-%, bevorzugt 8 bis 40 Gew.-% und besonders bevorzugt 9 bis 30 Gew.-% in den Zusammensetzungen vorhanden ist;
- die Komponente (c), die eine von (b) verschiedene Kohlenwasserstoffverbindung ist, in einer Menge von 5 bis 90 Gew.-%, bevorzugt 10 bis 50 Gew.-% und besonders bevorzugt 15 bis 40 Gew.-% in den Zusammensetzungen vorhanden ist;
- die Komponente (d), die mindestens ein Latex ist und aus mindestens einem Polymer und/oder Copolymer als wässrige Emulsion besteht, in einer Menge von 10 bis 45 Gew.-% Trockenextrakt und vorzugsweise 15 bis 35 Gew.-% Trockenextrakt in den Zusammensetzungen vorhanden ist;
- die Komponente (e), die aus mindestens einem pulverigen Füllstoff mineralischer oder organischer Herkunft besteht, in einer Menge von 0,01 bis 10 Gew.-% und vorzugsweise 0,02 bis 5 Gew.-% in den Zusammensetzungen vorhanden ist ;
- und Wasser: q.s. ad 100 Gew.-%.

18. Zusammensetzungen nach irgendeinem der Ansprüche 1 bis 15, **dadurch gekennzeichnet, dass** sie umfassen:
- 2 bis 90 Gew.-% einer Komponente (a) als Trockenextrakt, bestehend aus mindestens einem Erdöl- oder Syntheseparaffin, das in Mischung aliphatische gesättigte und ungesättigte Kohlenwasserstoffe der allgemeinen Formeln CₙH₂ₙ₊₂ und CₙH₂ₙ enthält, wobei n mindestens gleich 30 ist, und dessen Schmelzpunkt zwischen 40°C und 75°C liegt;
- 5 bis 90 Gew.-% einer Komponente (b) bestehend aus mindestens einem linearen und/oder cyclischen Kohlenwasserstofföl aliphatischer und/oder naphtenischer Herkunft, die Kohlenwasserstoffketten allein oder in Mischung der allgemeinen Formeln CₙH₂ₙ₊₂ und CₙH₂ₙ sind, wobei n kleiner als 30 ist; und/oder
- 5 bis 90 Gew.-% einer Komponente (c), die mindestens ein Öl bestehend aus mindestens einem Ester enthält, der aus der Kondensreaktion einer gesättigten und/oder ungesättigten Fettsäure mit einem ein-, zwei- oder dreiwertigen Alkohol resultiert;
- 10 bis 45 Gew.-% einer Komponente (d), die mindestens einen Latex enthält, der aus einer kolloidalen wässrigen Emulsion aus mindestens einem Polymer besteht;
- 0,01 bis 10 Gew.-% einer Komponente (e) bestehend aus mindestens einem pulverigen mineralischen Füllstoff mit einer spezifischen BET-Oberfläche von mindestens 1 m²/g;
- und Wasser: q.s. ad 100 Gew.-%.

19. Zusammensetzungen nach Anspruch 18, **dadurch gekennzeichnet, dass** sie umfassen :
- vorzugsweise 5 bis 60 Gew.-% und besonders bevorzugt 5 bis 40 Gew.-% der Komponente (a);
- vorzugsweise 8 bis 40 Gew.-% und besonders bevorzugt 9 bis 30 Gew.-% der Komponente (b); und/oder
- vorzugsweise 10 bis 50 Gew.-% und besonders bevorzugt 15 bis 40 Gew.-% der Komponente (c);
- und vorzugsweise 15 bis 35 Gew.-% Trockenextrakt der Komponente (d);
- und vorzugsweise 0,02 bis 5 Gew.-% der Komponente (e);
- und Wasser: q.s ad 100 %.

20. Zusammensetzungen nach irgendeinem der Ansprüche 18 oder 19, **dadurch gekennzeichnet, dass** das Gewichtsverhältnis von aktiver Trockensubstanz zur Summe der vorhandenen Öle und des vorhandenen Paraffins mindestens 0,25 beträgt, vorzugsweise mindestens 0,63 beträgt und besonders bevorzugt zwischen 0,64 und 9 beträgt.

21. Zusammensetzungen nach irgendeinem der Ansprüche 1 bis 20, **dadurch gekennzeichnet, dass** die Zusammensetzungen in Form einer Emulsion einen Gehalt an Trockensubstanz von 10 bis 60 Gew.-% und vorzugsweise 30 bis 50 Gew.-% haben.

22. Verfahren zur Herstellung von Zusammensetzungen wie in irgendeinem der Ansprüche 1 bis 21 definiert, **dadurch gekennzeichnet, dass** es aufeinander folgende Schritte zum Einbringen der einzelnen Komponenten in eine durch Rühren bewegte Herstellungszone umfasst, deren Inhalt erwärmt und/oder gekühlt werden kann, wobei diese Schritte folgende sind:
i) Einbringen, in kalkulierter Menge, des für die Bildung der Emulsion notwendigen Wassers und eventuell Einbringen eines Emulgierungsmittels in die genannte Zone, wobei das erste Gemisch während der Zeit, die zur Gewinnung eines homogenen Mediums notwendig ist, stark gerührt wird;
ii) Einbringen, in kalkulierten Mengen, des Gemischs aus den Kohlenwasserstoffverbindungen der Komponenten (b) und/oder (c), wobei ein zweites Gemisch entsteht, das während der Zeit, die zur Gewinnung einer Emulsion notwendig ist, genauso stark gerührt wird;
iii) Einbringen, in kalkulierter Menge und unter sanftem Rühren, des Paraffins in das zweite Gemisch,
- welches Paraffin vorher auf eine Temperatur erwärmt wird, die ausreicht, um sein Schmelzen und seinen Übergang in den Emulsionszustand herbeizuführen, wenn das Paraffin in Form von sehr feinem Pulver eingeleitet wird; oder
- auf Raumtemperatur erwärmt wird, wenn das Paraffin in Form einer wässrigen Emulsion eingeleitet wird;
und Aufrechterhaltung der sanften Rührbewegung während der zur Gewinnung der Emulsion notwendigen längeren Zeit, mit einer eventuellen Abkühlung der Emulsion;
iv) Einbringen in das Gemisch aus iii), in kalkulierter Menge und unter sanftem Rühren, der Komponente (d), bei der es sich um den Latex handelt, der während der Zeit, die zur Gewinnung der wässrigen Emulsion aus den Komponenten (a), (b), (c) und (d) notwendig ist, sanft gerührt wird;
v) Einbringen in die Emulsion aus iv), in kalkulierter Menge und unter starkem Rühren, der Komponente (e), bei der es sich um den mineralischen Füllstoff handelt;
vi) und sanftes Rühren der Emulsion, die aus dem zu einer wässrigen Emulsion aus v) verarbeiteten zweiten Gemisch hervorgeht, während längerer Zeit, um die gebildete wässrige Emulsion, die alle Komponenten enthält, zu homogenisieren.

23. Verwendung der Zusammensetzungen wie in einem der Ansprüche 1 bis 21 definiert zum Schutz gegen die Verdunstung von Wasser und zur erhöhten Haftung von Oberflächen frisch eingebrachter oder frisch entformter Mörtel und/oder Betone durch Aufspritzen der Zusammensetzungen in Form von wässrigen Emulsionen auf die genannten Oberflächen in Höhe einer aufgebrachten Nutzlast pro Flächeneinheit von 50 g/m² bis 150 g/m², um vollständigen Schutz zu erreichen.
